# EUROPEAN PATENT APPLICATION

(11) **EP 2 838 258 A1**
(43) Date of publication of application: **18.02.2015**
(21) Application number: 13776336.3
(22) Date of filing: 25.01.2013
(51) Int. Cl.: H04N 7/173, G06Q 30/02, H04N 7/26

(54) **INFORMATION PROVISION SYSTEM**

(30) Priority: 13.04.2012 JP 2012091667; 28.09.2012 JP 2012216067
(71) Applicant: Hitachi Solutions, Ltd., Tokyo 140-0002 (JP)
(72) Inventor: KAMITANI, Motoki, Tokyo 140-0002 (JP); MANO, Masahiko, Tokyo 140-0002 (JP); TAMURA, Tomoko, Tokyo 140-0002 (JP)
(74) Representative: Ström & Gulliksson AB
(86) International application number: PCT/JP2013/000368
(87) International publication number: WO 2013/153718

(57) **Abstract**

A system capable of providing information having a large amount of data without spoiling the aesthetic appearance of an object is provided. An information provision terminal device 8 which has received an address corresponding code transmits the address corresponding code to a video transmission device 12 of a broadcasting station. The video transmission device 12 embeds the received address corresponding code as a digital watermark in video to generate a broadcast program (broadcast contents) and transmits the broadcast program. An information address acquisition means 24 transmits the extracted address corresponding code to a management server device 4. An information address transmission means 44 of the management server device 4 reads an information address recorded with the address corresponding code from a recording unit 42 and transmits the information address by return to an information reception terminal device 2. An information acquisition means 26 accesses an information provision server device 6 on the basis of the acquired information address. An information transmission means 60 of the information provision server device 6 transmits provided information to the information acquisition means 26 of the information reception terminal 2.

## Description

### Field of the Invention

The present invention relates to a system for providing information using watermark data embedded in images or the like.

### Background Art

Some of the flyers and pages of magazines are provided with QR codes (trademark) to provide additional information such as product information. A user can view a web page that provides the additional information by capturing an image of such a QR code (trademark) using a mobile information terminal device or the like and acquiring a URL described by the QR code (trademark) (Patent Document 1).

Also, there is proposed a technique in which a URL is described using a digital watermark instead of a QR code (Paragraph 0070 in Patent Document 2).

Thus, additional information may be provided.

### List of Related Art

Patent Document 1: JP 2006-18724 A
Patent Document 2: JP 2002-41383 A

### Summary of the Invention

### Problem to be Solved by the Invention

However, with the system of Patent Document 1, since the QR codes (trademark) need to be printed on the flyers and magazines, the system presented a problem that the codes spoil aesthetic appearance of the flyers and magazines. On the other hand, with the system in Patent Document 2, aesthetic appearance is not spoiled, since a digital watermark is not easily identifiable by human. However, amount of data that can be embedded by means of a digital watermark was small, as compared to the QR code (trademark), making it difficult to provide a wealth of information.

The purpose of the present invention is to provide a system that can provide information having a large data size, by solving the abovementioned problem and not spoiling the aesthetic appearance of the object.

### Means for Solving the Problem

(1)(2)(3)(4)(5) An information provision system according to the present invention provided with an information reception terminal device; an information provision terminal device; a management server device; and an information provision server device, wherein
the information reception terminal device includes: an image capturing unit that captures an image of an imaging target having a watermark data embedded therein; a watermark data extraction means for extracting watermark data from an image data which has been obtained by capturing an image of an imaging target by the image capturing unit; an information address acquisition means for acquiring an information address corresponding to the extracted watermark data from the management server; and an information acquisition means for acquiring information from the information provision server on the basis of the acquired information address, and
the management server device comprises: a recording means for receiving, from the information provision terminal device, the information address of the recorded information and recording the information address in a recording unit in association with a watermark data that is embedded in the imaging target; and an information address transmission means for, upon receiving a watermark data from the information reception terminal device, referencing the recording unit and acquiring the information address corresponding to the watermark data and by return transmitting the information address to the information reception terminal device, and
the information provision server device is provided with an information transmission means for transmitting information corresponding to the watermark data to the information reception terminal device in response to access from the information reception terminal device.

Accordingly, a wealth of information can be provided to the information reception terminal device while the data size of the watermark data is kept small.

(6) The information provision system according to the present invention is characterized in that the imaging target having a watermark data embedded therein is a content displayed on a display.

Accordingly, additional information can be provided for the content displayed on the display without spoiling the aesthetic appearance of the content.

(7) The information provision system according to the present invention is characterized in that the content displayed on the display is an image captured by a photo sticker device, and the information address is an address of the information provision server device that provides data input by a user on the photo sticker device.

Accordingly, additional information can be provided for an image captured by the photo sticker device without spoiling the aesthetic appearance thereof.

(8) The information provision system according to the present invention is characterized in that the content displayed on the display is an image captured by a video camera, and the information address is an address of the information provision server device that provides data input by a user regarding the image captured by the video camera, a date and time of recording the video, or a place of recording the video.

Accordingly, additional information can be provided for an image captured by the video camera without spoiling the aesthetic appearance thereof.

(9) The information provision system according to the present invention is characterized in that the imaging target having a watermark data embedded therein is a broadcast content displayed on a TV set.

Accordingly, additional information can be provided for the broadcast content without spoiling the aesthetic appearance thereof.

(10) The information provision system according to the present invention is characterized in that the broadcast content is an animation ("anime") , the information reception terminal device is a game device, and the watermark data contain a description of the information address of the information provision server device that allows access to in-game items relating to the animation.

Accordingly, in-game items can be provided additionally without spoiling the aesthetic appearance of the broadcast content.

(11) The information provision system according to the present invention is characterized in that the broadcast content includes appearances of actors or broadcasters, and the watermark data contain a description of the information address of an information provision server device of a store that sells outfits worn by the actors or broadcasters.

Accordingly, a user can be led to a server of a store without spoiling the aesthetic appearance of the broadcast content.

(12) The information provision system according to the present invention is characterized in that the broadcast content is a broadcast content in which cuisines appear, and the watermark data contain a description of the information address of an information provision server that provides recipes for the cuisines.

Accordingly, recipe information can be provided without spoiling the aesthetic appearance of the broadcast content.

(13) The information provision system according to the present invention is characterized in that the information address transmission means of the management server device transmits, to the information reception terminal device, different information addresses for the same watermark data in accordance with a current date and time.

Accordingly, information can be provided in accordance with the current date and time.

(14) The information provision system according to the present invention is characterized in that the information provision server device varies a content of provided information in accordance with a current date and time of receipt of a request.

Accordingly, information can be provided in accordance with the current date and time.

(15) The information provision system according to the present invention is characterized in that the information address acquisition means of the information reception terminal device transmits, at a time of transmitting the watermark data to the management server so as to acquire the information address corresponding to the watermark data, user attribute of the information reception terminal device together with the watermark data, and the information address transmission means of the management server device transmits, to the information reception terminal device, different information addresses for the same watermark data in accordance with the user attributes.

Accordingly, information can be provided in accordance with the user attributes.

(16) The information provision system according to the present invention is characterized in that the user attributes include one of sex, age, occupation, address, and current location of the information reception terminal device of a user.

Accordingly, different information can be provided on the basis of sex, age, occupation, address, current location of the information reception terminal device of a user, and the like.

(17) (18) (19) An audience rate calculation system according to the present invention provided with a user terminal device and a management server device, is characterized in that
the user terminal device includes: an image capturing unit that captures an image of a broadcast content having embedded therein a watermark data containing description of a program ID for identifying a program; a watermark data extraction means for extracting the watermark data to acquire the program ID from an image data which has been obtained by capturing an image of the broadcast content by the image capturing unit; and a program ID transmission means for transmitting the acquired program ID to the management server device, and
the management server device includes: a program ID reception means for receiving the program ID from the user terminal device; and an audience rate acquisition means for executing a process for calculating an audience rate on the basis of the program ID.

Accordingly, an audience rate can be calculated without using a special device.

(20) (21) (22) The information provision system according to the present invention provided with an information reception terminal device; an information provision terminal device; and a management server device, is characterized in that
the information reception terminal device includes: an image capturing unit that captures an image of an imaging target having a watermark data embedded therein; a watermark data extraction means for extracting watermark data from an image data which has been obtained by capturing an image of an imaging target by the image capturing unit; and an information acquisition means for acquiring provided information corresponding to the extracted watermark data from the management server; and
the management server device includes: a recording means for receiving, from the information provision terminal device, the provided information and recording the provided information in a recording unit in association with a watermark data that is embedded in the imaging target; and an information transmission means for, upon receiving a watermark data from the information reception terminal device, referencing the recording unit and acquiring the provided information corresponding to the watermark data and by return transmitting the provided information to the information reception terminal device, the information transmission means of the management server device varying a content of provided information on the basis of a current date and time.

Accordingly, the content of provided information can be varied on the basis of the current date and time.

(23)(24)(25)(26)(27) An information provision system according to the present invention provided with an information reception terminal device; an information provision terminal device; and a management server device, is characterized in that
the information reception terminal device includes: an image capturing unit that captures an image of an imaging target having a watermark data embedded therein; a watermark data extraction means for extracting watermark data from an image data which has been obtained by capturing an image of an imaging target by the image capturing unit; and an information acquisition means for acquiring, from the management server, provided information corresponding to the watermark data and user attributes by transmitting, to the management server device, the extracted watermark data and the user attributes of the information reception terminal device; and
the management server device includes: a recording means for receiving, from the information provision terminal device, the provided information corresponding to user attributes and recording the provided information in a recording unit in association with the watermark data that is embedded in the imaging target; and an information transmission means for, upon receiving the watermark data and the user attributes from the information reception terminal device, referencing the recording unit and acquiring the provided information corresponding to the watermark data and the user attributes and by return transmitting the provided information to the information reception terminal device.

Accordingly, information can be provided in accordance with the user attributes.

(28) The information provision system according to the present invention is characterized in that the user attributes include one of sex, age, occupation, address, and current location of the information reception terminal device of a user.

Accordingly, appropriate information can be provided on the basis of sex, age, occupation, and the like, of a user.

(29) The information provision system according to the present invention is characterized in that the imaging target having a watermark data embedded therein is a content displayed on a display.

Accordingly, information can be provided without spoiling the aesthetic appearance of the content displayed on the display.

(30) The information provision system according to the present invention is characterized in that the content displayed on the display is an image captured by a photo sticker device, and the provided information is a data input by a user on the photo sticker device.

Accordingly, information can be provided without spoiling the aesthetic appearance of the photo sticker.

(31) The information provision system according to the present invention is characterized in that the content displayed on the display is an image captured by a video camera, and the provided information is a data input by a user regarding the image captured by the video camera, a date and time of recording the video, or a place of recording the video.

Accordingly, information can be provided without spoiling the aesthetic appearance of the video image.

(32) The information provision system according to the present invention is characterized in that the imaging target having a watermark data embedded therein is a broadcast content displayed on a TV set.

Accordingly, information can be provided without spoiling the aesthetic appearance of the broadcast content.

(33) The information provision system according to the present invention is characterized in that the imaging target having a watermark data embedded therein is printed on a magazine, a flyer, a newspaper, a book, or a poster.

Accordingly, information can be provided without spoiling aesthetic appearance of magazines and flyers.

(34) The information provision system according to the present invention is characterized in that the imaging target having a watermark data embedded therein is a part of a product or a tag of a product, and the provided information is information indicating that the product is a genuine product.

Accordingly, information on genuine products can be provided without spoiling aesthetic appearance of a product.

(35) (36) (37) An information provision system according to the present invention provided with a user terminal device; an information provision terminal device; a management server device; an information provision server device; and a web server device, is characterized in that
the user terminal device includes: an image capturing unit that captures an image of an imaging target having a watermark data embedded therein; a watermark data extraction means for extracting watermark data from an image data which has been obtained by capturing an image of an imaging target by the image capturing unit; an information address acquisition means for acquiring an information address corresponding to the extracted watermark data from the management server device; and an upload means for attaching the acquired information address to the image captured by the image capturing unit as a link, and uploading this link to the web server device, and
the management server device includes: a recording means for receiving, from the information provision terminal device, the information address of the recorded information and recording the information address in a recording unit in association with a watermark data that is embedded in the imaging target; and an information address transmission means for, upon receiving a watermark data from the information reception terminal device, referencing the recording unit and acquiring the information address corresponding to the watermark data and by return transmitting the information address to the information reception terminal device.

Accordingly, link information for uploading can be automatically generated by embedding a watermark in the imaging target.

(38) (39) (40) (41) (42) An information registration system according to the present invention provided with a user terminal device; an information provision terminal device; a management server device; and a web server device, is characterized in that
the user terminal device includes: an image capturing unit that captures an image of an imaging target having a watermark data embedded therein; a watermark data extraction means for extracting watermark data from an image data which has been obtained by capturing an image of an imaging target by the image capturing unit; a registered information acquisition means for acquiring a registered information corresponding to the extracted watermark data from the management server; and a registering means for transmitting the acquired registered information to the web server device, and
the management server device includes: a recording means for receiving, from the information provision terminal device, the registered information and recording the registered information in a recording unit in association with a watermark data that is embedded in the imaging target; and a registered information transmission means for, upon receiving a watermark data from the information reception terminal device, referencing the recording unit and acquiring a registration method corresponding to the watermark data and by return transmitting the registration method to the user terminal device.

Accordingly, information can be registered in the web server by embedding a watermark in the imaging target.

(43) The system according to the present invention is characterized in that the registered information includes at least an image of the imaging target.

Accordingly, an image can be registered easily.

(44) The system according to the present invention is characterized in that the registered information includes at least image-associated data for the web server to acquire an image of the imaging target.

Accordingly, an image can be registered without having to directly transmit an image to the web server.

(45) The system according to the present invention is characterized in that the registered information includes at least a program for constructing the registering means.

Accordingly, processing can be carried out flexibly according to the circumstances.

(46) The system according to the present invention is characterized in that the provided information includes a program executed by the information reception terminal device

Accordingly, much richer information and function can be provided.

In the present invention, the term "information reception terminal device" refers to a device that receives provided information or information necessary in receiving the provided information. This includes mobile phones, handheld information terminal devices, handheld game devices, PCs, cameras having communication functions, and the like.

The "image capturing unit" is for capturing an image of an imaging target. It includes, ordinary cameras, infrared cameras, CCD sensor arrays, and the like.

The "watermark data extraction means" corresponds to steps S52 and S53 in the embodiment.

The "information address acquisition means" corresponds to a step S53 in the embodiment.

The "information acquisition means" corresponds to a step S57 in the embodiment.

The "recording means" corresponds to a step S11 in the embodiment.

The "information address transmission means" corresponds to a step S13 in the embodiment.

The "information transmission means" of the information provision server device corresponds to a step S101 in the embodiment.

The "information transmission means" of the management server device corresponds to a step S18 in the embodiment.

Further, in the present invention, the terms "terminal device" and "server device" are used interchangeably. A terminal device that communicates with a server device may serve as a server device in other situations. In this specification, the same device is expressed as a "terminal device" in one case and expressed as a "server device" in another. In other words, the term "terminal device" means that the device is capable of serving as a terminal device and the term "server device" means that the device is capable of serving as a server device.

The term "program" refers to a general idea that includes not only those programs that are directly executable by a CPU but also such programs as a source program, a compressed program, and an encrypted program.

### [Brief Description of Drawings]

FIG. 1 is an overall configuration diagram of an information provision system according to a first embodiment.
FIG. 2 is a block diagram of a video transmission device 12.
FIG. 3 is a hardware configuration diagram of an information reception terminal device 2.
FIG. 4 is a hardware configuration diagram of a management server device 4.
FIG. 5 is a hardware configuration diagram of an information provision terminal device 8.
FIG. 6 is a flowchart illustrating registration process of provided information.
FIG. 7 is an example of a correspondence table.
FIG. 8 is a flowchart for a provided information acquisition process.
FIG. 9 is an example of a TV screen image and an example of an image shown when an image of the TV screen image is captured and the link for provided information is displayed.
FIG. 10 is a diagram illustrating the provided information (recipe), which is displayed, as a result of clicking the link.
FIG. 11 is an example of a TV screen image and an example of an image shown when an image of the TV screen is captured and the link for provided information is displayed.
FIG. 12 is an example of a correspondence table in the case where a plurality of links are displayed.
FIG. 13 is an overall configuration diagram of an information provision system according to a second embodiment.
FIG. 14 is an example showing a page of a magazine which is an imaging target and the link that is displayed as a result of capturing an image of the page.
FIG. 15 is an overall configuration diagram of an information provision system according to a third embodiment.
FIG. 16 is a flowchart for a provided information acquisition process.
FIG. 17 is an example of two separate images displayed at different times of day.
FIG. 18 is an example of a correspondence table for transmitting different URLs in accordance with user attributes.
FIG. 19 is an example of URLs, embedded in the form of a watermark, of thank you messages for the respective attendants of a wedding or the like.
FIG. 20 is an overall configuration diagram of an information provision system according to a fourth embodiment.
FIG. 21 is a flowchart for an information reception process.
FIG. 22 is an overall configuration diagram of an audience rate calculation system according to a fifth embodiment.
FIG. 23 is an overall configuration diagram of an information provision system according to a sixth embodiment.
FIG. 24 is an overall configuration diagram of an information registering system according to a seventh embodiment.
FIG. 25 is a flowchart for an information registering process.
FIG. 26 is a flowchart for an information registering process.
FIG. 27 is an example of a screen displayed on a user terminal device 3.
FIG. 28 is an example of registered information recorded in the management server device
FIG. 29 is an example of displaying the registered information on an SNS screen.
FIG. 30 is an example of a screen displayed on a user terminal device 3.

### Embodiment of the Invention

### 1. First Embodiment

### 1.1 Overall configuration

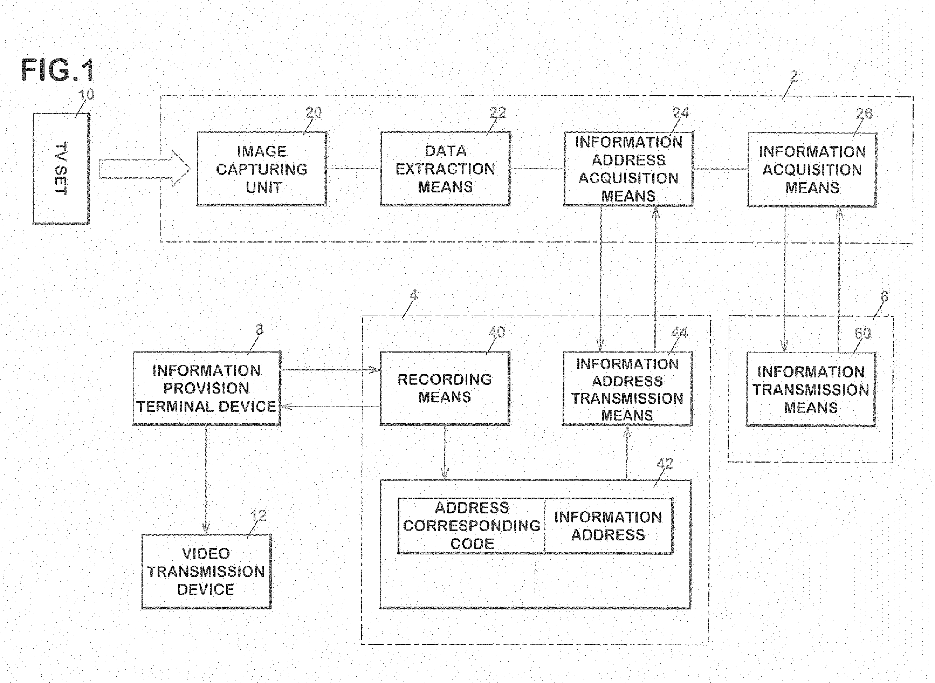

FIG. 1 shows an overall configuration of an information provision system according to a first embodiment of the present invention. This system is provided with an information reception terminal device 2, a management server device 4, an information provision server device 6, and an information provision terminal device 8.

The one who provides information operates the information provision terminal device 8 to send, to the management server device 4, an information address of an information provision server device 6 in which the information one desires to provide is recorded. A recording means 40 of the management server device 4 allocates an address corresponding code to the information address that has been received, and records the information address and the address corresponding code in a recording unit 42. This address corresponding code is returned to the information provision terminal device 8.

The information provision terminal device 8 that has received the address corresponding code sends the code to a video transmission device 12 of a broadcasting station. The address corresponding code that has been received is embedded in a video, by the video transmission device 12, as a digital watermark, and a broadcast program (broadcast content) is generated so as to be transmitted.

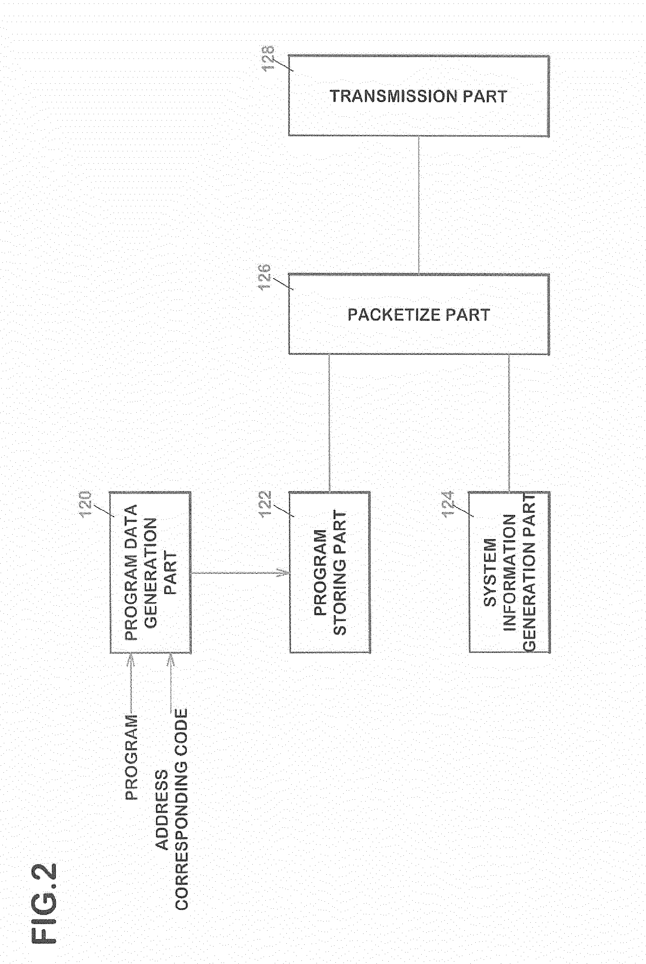

FIG. 2 shows a configuration of the video transmission device 12. The broadcast program and the address corresponding code are given to a program data generation part 120. The program data generation part 120 embeds the address corresponding code in the video of the program as a digital watermark. The program data thus generated is then recorded in a program storing part 122.

A system information generation part 124 generates control data or the like. A packetize part 126 packetizes the program data and the control data. A transmission part 128 transmits the program data and the control data thus packetized.

Referring back to FIG. 1, the broadcast program is displayed on a screen of a TV set 10. An image capturing unit 20 of the information reception terminal device 2 is operated by a user so as to capture an image of the broadcast program on the screen. A data extraction means 22 extracts the address corresponding code that is embedded, as a digital watermark, in the image that has been taken.

An information address acquisition means 24 transmits the extracted address corresponding code to the management server device 4. An information address transmission means 44 of the management server device 4 reads out, from the recording unit 42, the information address that is recorded therein together with the address corresponding code, and returns the address corresponding code to the information reception terminal device 2.

An information acquisition means 26 of the information reception terminal device 2 accesses the information provision server device 6 on the basis of the information address acquired. An information transmission means 60 of the information provision server device 6 transmits provided information to the information acquisition means 26 of the information reception terminal device 2.

As mentioned above, the address corresponding codes are embedded in TV broadcast programs in advance, such that information relating thereto can be provided when a user captures an images of the broadcast program with an information reception terminal device 2 such as a mobile phone.

### 1.2 Hardware configuration

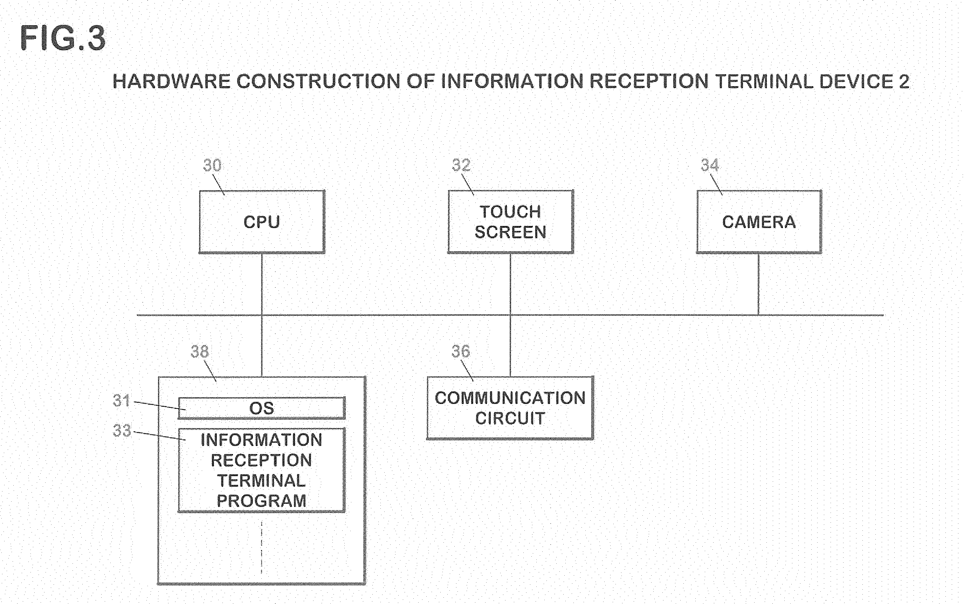

FIG. 3 shows a hardware configuration of the information reception terminal device 2. In this embodiment, a mobile phone device is used as the information reception terminal device 2. A touch screen 32, a camera 34, a non-volatile memory 38, and a communication circuit 36 are connected to a CPU 30. Further, in FIG. 3, speaking circuits or the like are omitted.

The communication circuit 36 is for connecting to the Internet. An operating system 31 such as the Android (trademark) and an information reception terminal program 33 are recorded in the non-volatile memory 38. The information reception terminal program 33 fulfills its function by working in cooperation with the OS 31. The OS 31 and the information reception terminal program 33, which had been recorded in a recording medium, were installed into the non-volatile memory 38.

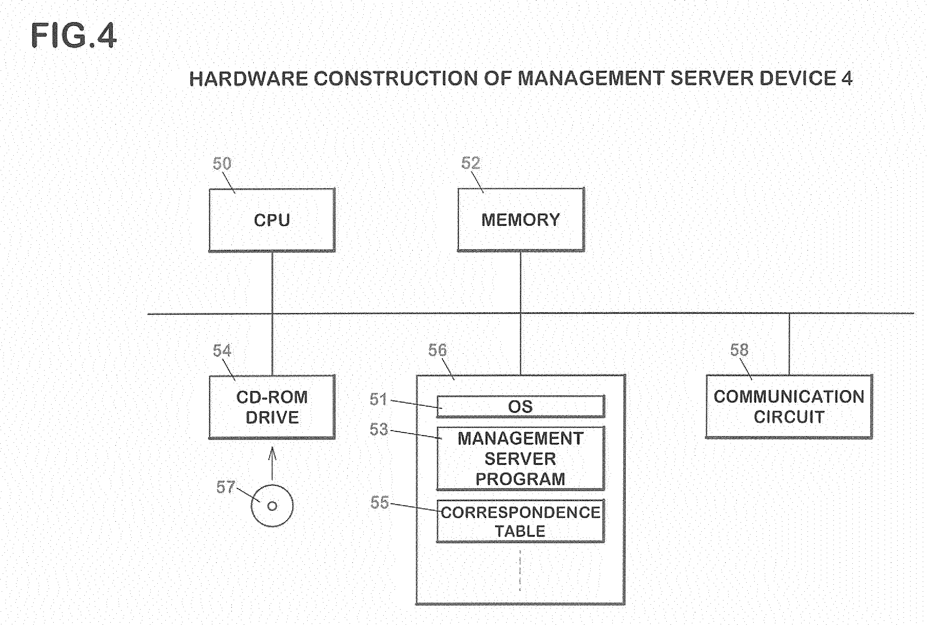

FIG. 4 shows a hardware configuration of a management server device 4. A memory 52, a CD-ROM drive 54, a hard disk 56, and a communication circuit 58 are connected to a CPU 50.

The communication circuit 58 is for connecting to the Internet. An operating system 51 such as the WINDOWS (trademark), a management server program 53, and a correspondence table 55 are recorded in the hard disk 56. The management server program 53 fulfills its function by working in cooperation with the OS 51. The OS 51 and the management server program 53, which had been recorded in the CD-ROM 57, were installed into the hard disk 56 via the CD-ROM drive 54.

A hardware configuration of the information provision server device 6 is similar to that of the management server device 4. However, an information provision server program is recorded in the hard disk 56 instead of the management server program 53.

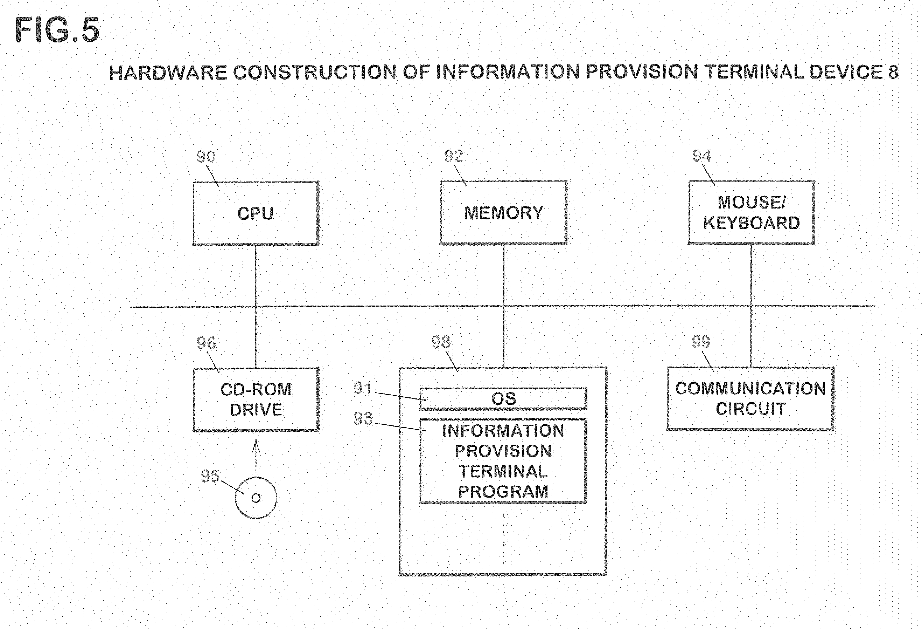

FIG. 5 shows a hardware configuration of the information provision terminal device 8. A memory 92, a mouse/keyboard 94, a CD-ROM drive 96, a hard disk 98, and a communication circuit 99 are connected to a CPU 90. The basic configuration thereof is similar to that of the management server device 4. However, an information provision terminal program 93 is recorded in the hard disk 98 instead of the management server program 53.

### 1.3 Registration process of provided information

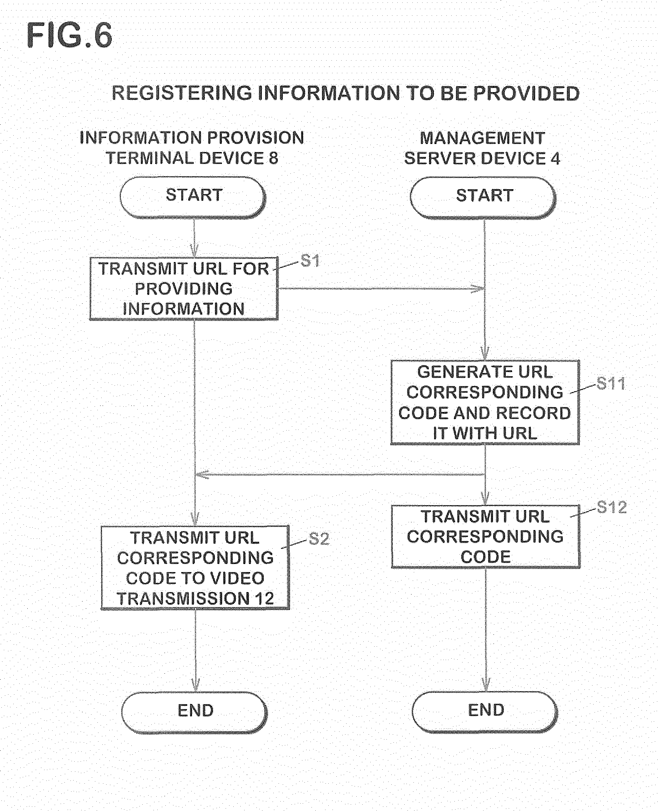

FIG. 6 shows a flowchart for the information provision program 93 and the management server program 53 during a registration process of provided information. Here, provided information is regarded as being recorded in the information provision server device 6 in advance.

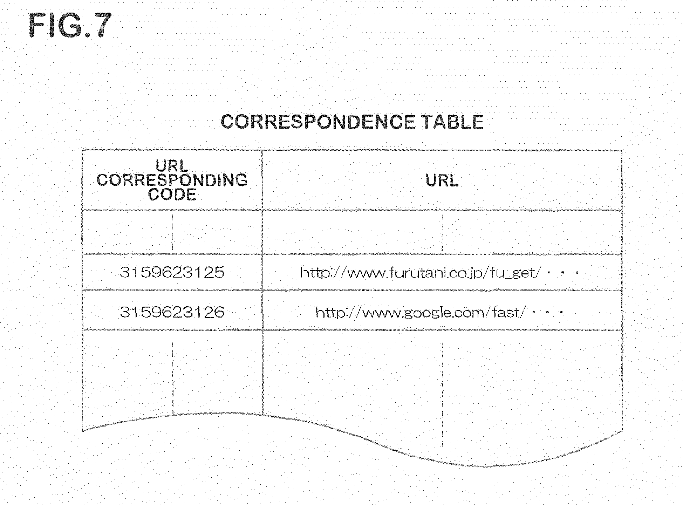

First, the CPU 90 of the information provision terminal device 8 (or, may be hereinafter simply referred to as the information provision terminal device 8) transmits URL of the information provision server device 4, in which the provided information is recorded, to the management server device 4 (step S1). The CPU 50 of the management server device 4 (or, may be hereinafter simply referred to as the management server device 4) that has received the URL generates a code corresponding to the URL (URL corresponding code), correlates the code to the URL, and records the URL and the URL corresponding code in the hard disk 56 (step S11). An example of the correspondence table 55 thus generated is shown in FIG. 7.

Next, the management server device 4 transmits the URL corresponding code to the information provision terminal device 8 (step S12). The information provision terminal device 8 that has received the URL corresponding code transmits the URL corresponding code to the video transmission device 12 (step S2). Accordingly, the URL corresponding code is embedded in a video of corresponding broadcast program (program content), by the video transmission device 12, as a digital watermark.

Methods for generating a digital watermark may include embedding a watermark information unidentifiable to human eye to a noise portion of an image, embedding a watermark information unidentifiable to human eye to a portion with a series of similar image components, and embedding a watermark information consisting of noise components unidentifiable to human eye to a portion of a quantized noise component. Or instead, information that is difficult to be identified by human eye may be embedded by adding a minute change to an image at a high space frequency range of the image, at a predetermined pattern. Minute change to an image may be made by using luminance of the image.

### 1.4 Provided information acquisition process

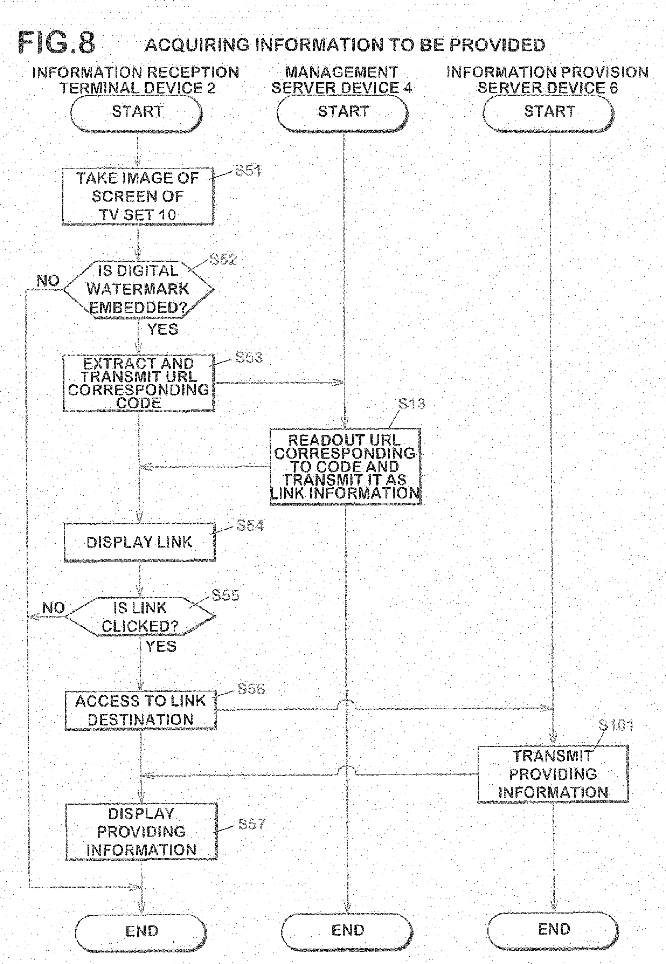

FIG. 8 shows a flowchart for the information reception terminal program 33, the management server program 53, and the provided information server program during a process for acquiring provided information.

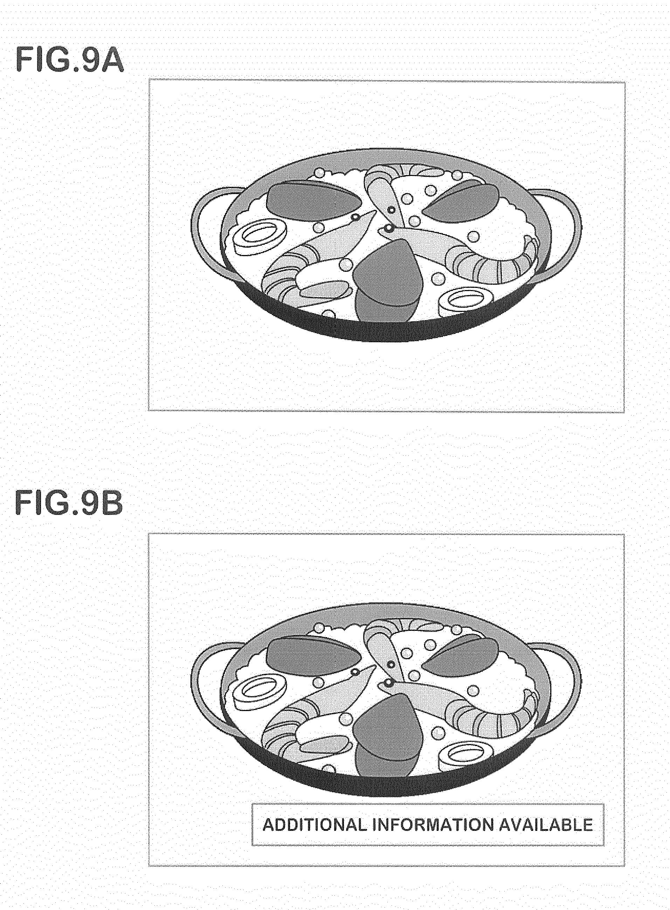

First, a user captures an image of a screen of the TV set 10 by the camera 34 of the information reception terminal device 2 (step S51). Accordingly, an image of a video of a broadcast program (broadcast content). FIG. 9A shows an example of a screen of the TV set 10.

The CPU 30 of the information reception terminal device 2 (or, may be hereinafter simply referred to as the information reception terminal device 2) determines whether a digital watermark is embedded in the image taken from the TV screen (step S52). If a digital watermark is not embedded, the provided information acquisition process is terminated.

If a digital watermark is embedded, the URL corresponding code is extracted to be transmitted to the management server device 4 (step S53). Here, it is assumed that "3159623125" has been extracted as the URL corresponding code.

Upon receiving the URL corresponding code, the management server device 4 references the correspondence table in FIG. 7, and acquires the URL corresponding to the URL corresponding code. Here, http://www.furutani.co.jp/fu_get/... is acquired as the URL corresponding to "3159623125." Further, this URL is transmitted to the information reception terminal device 2 as link information (step S13). In this embodiment, a text "ADDITIONAL INFORMATION AVAILABLE," which is linked to the URL in question, is transmitted. Specifically, an HTML as shown below is transmitted (header information and the like are omitted). Further, XML may be used in place of HTML.

<a href="http://www.furutani.co.jp/fu_get/....">ADDITIONAL INFORMATION AVAILABLE</a>

Upon receiving this HTML, the information reception terminal device 2 displays the abovementioned link by superimposing it on the image taken (step S54). A screen having a link thus displayed is shown in FIG. 9B.

Next, the information reception terminal device 2 determines whether the link on the screen shown in FIG. 9B has been clicked (step S55). If it has not been clicked, the provided information acquisition process is terminated.

If the link has been clicked, the information reception terminal device 2 accesses a link destination designated by the URL (that is, the information provision server device 6), and requests a page transmission (step S56).

Upon receiving the request, a CPU of the information provision server device 6 (or, may be hereinafter simply referred to as the information provision server device 6) transmits the page with the provided information (step S101). The information reception terminal device 2 displays this page on the touch screen 32 (step S57).

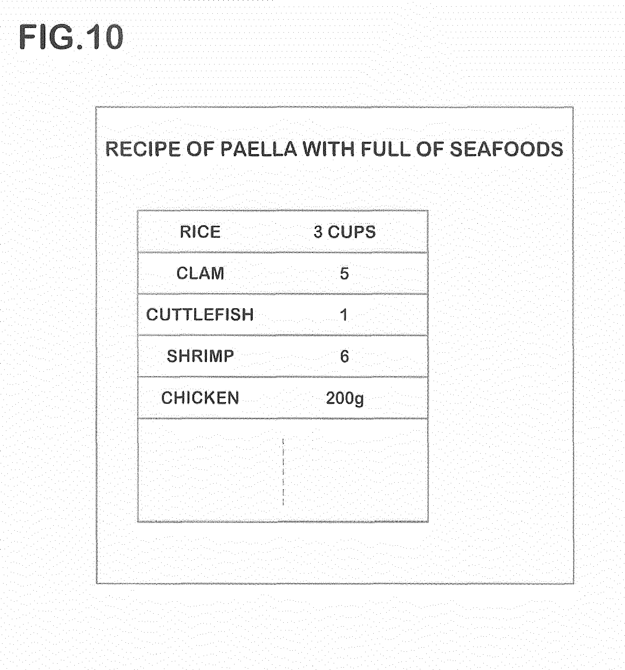

Provided information thus displayed on the information reception terminal device 2 is shown in FIG. 10. In this embodiment, a recipe is provided as the provided information.

As described above, recipes of dishes that appear on a show can be provided as the provided information.

### 1.5 Others

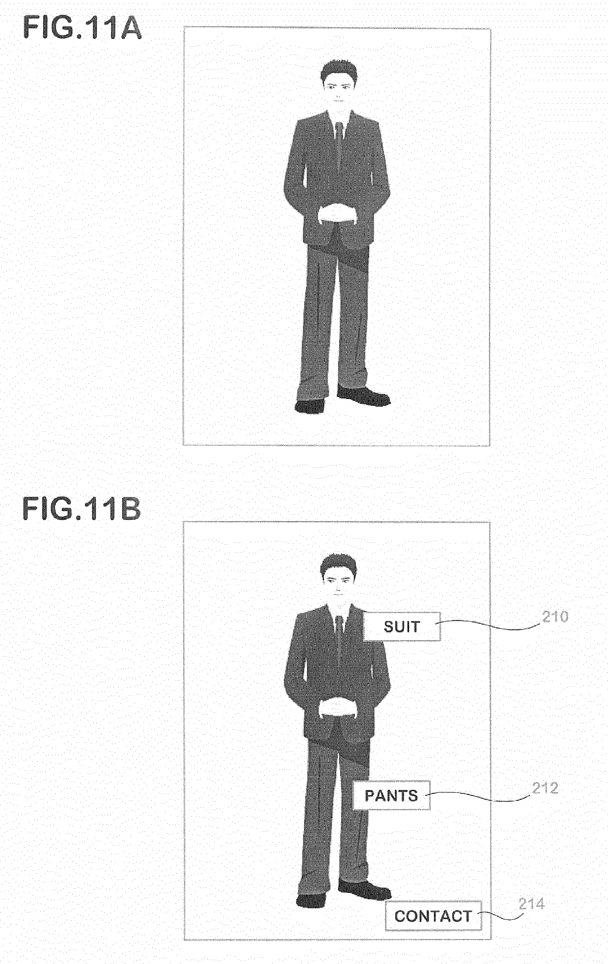

(1) In the abovementioned embodiment, recipe of a dish is provided as the provided information. However, other information relating to subjects in the image may also be provided. For example, links 210, 212, 214 as shown in FIG. 11B may appear when a user takes an image of a screen of the TV set 10 (refer to FIG. 11A) with the information reception terminal device 2.

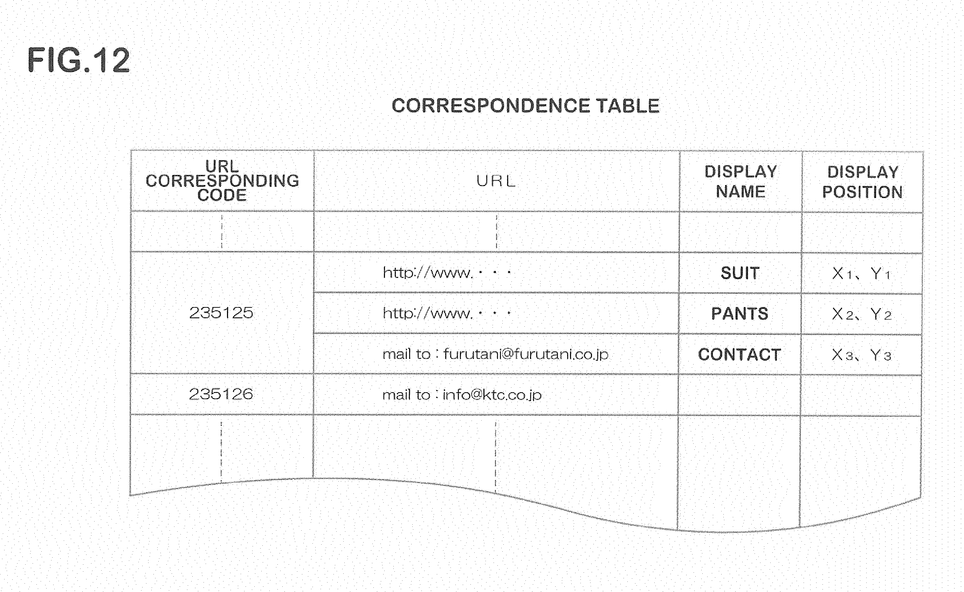

In the embodiment shown in FIG. 11B, a plurality of links are displayed on one screen. This can be realized as follows. FIG. 12 shows a correspondence table. In this correspondence table, a plurality of URLs are correlated to one URL corresponding code that is embedded as a watermark. For example, three URLs (one of which is "mailto") are correlated to the URL corresponding code "235125."

In the table of FIG. 12, "DISPLAY NAME" refers to a text that is displayed when a link is displayed. "DISPLAY POSITION" refers to a position on an image at which the "DISPLAY NAME" text is displayed. Further, in this embodiment, a relative coordinate system is employed to indicate the display position, in which the upper left-hand corner of the image is (0, 0) and the lower right-hand corner is (100, 100), regardless of the size of the image.

The one who provides information uses the information provision terminal device 8 to register the information in the management server device 4 in advance.

During the information reception process, the information reception terminal device 2 extracts the URL corresponding code and transmits the URL corresponding code to the management server device 4 (step S53). Upon receiving this, the management server device 4 returns the link information of the corresponding URL (step S13). For example, if the URL corresponding code is "235125," the three URLs in FIG. 12 are read out, and a display as shown in FIG. 11B is displayed.

(2) In the abovementioned embodiment, the information reception terminal device 2 extracts the watermark data. However, the management server device 4 may perform this extraction. In this case, the image captured need only be transmitted from the information reception terminal device 2 to the management server device 4.

In this way, since the management server device 4 extracts the embedded data, unauthorized access by the information reception terminal device 2 to the provided information can be prevented.

Further, the process may be configured such that the information reception terminal device 2 determines whether the watermark data can be acquired, and if determined to be possible, such data is transmitted to the management server device 4.

(3) In the abovementioned embodiment, a mobile phone is used as the information reception terminal device 2. However, a handheld game device may be used as well. For example, information address corresponding codes are embedded in an animation program on TV in advance. Then an image of the animation is captured using a handheld game device that allows one to play a game related to the animation in question. In this way, game-related data such as in-game items can be acquired as the provided information.

(4) In the abovementioned embodiment, while contents displayed on the screen of the TV set were imaging targets, contents displayed on a display of a PC device may also be the imaging target.

(5) In the abovementioned embodiment, while contents displayed on the screen of the TV set were imaging targets, contents displayed on a guide display provided on the street and in public facilities may also be the imaging targets.

(6) In the abovementioned embodiment, provided information is registered in the management server device 4 via the information provision terminal device 8. However, the provided information may be directly registered into the management server device 4.

(7) In the abovementioned embodiment, it is determined whether a digital watermark is embedded in step S52, and the watermark data is extracted in step S53. However, in the case where it is impossible to determine whether a digital watermark is embedded unless the process for extracting watermark data is performed, steps S52 and S53 are executed integrally.

(8) Further, other embodiments according to the embodiments below are applicable to the present embodiment to the extent that they do not depart from the essence of the embodiment.

### 2. Second Embodiment

### 2.1 Overall configuration

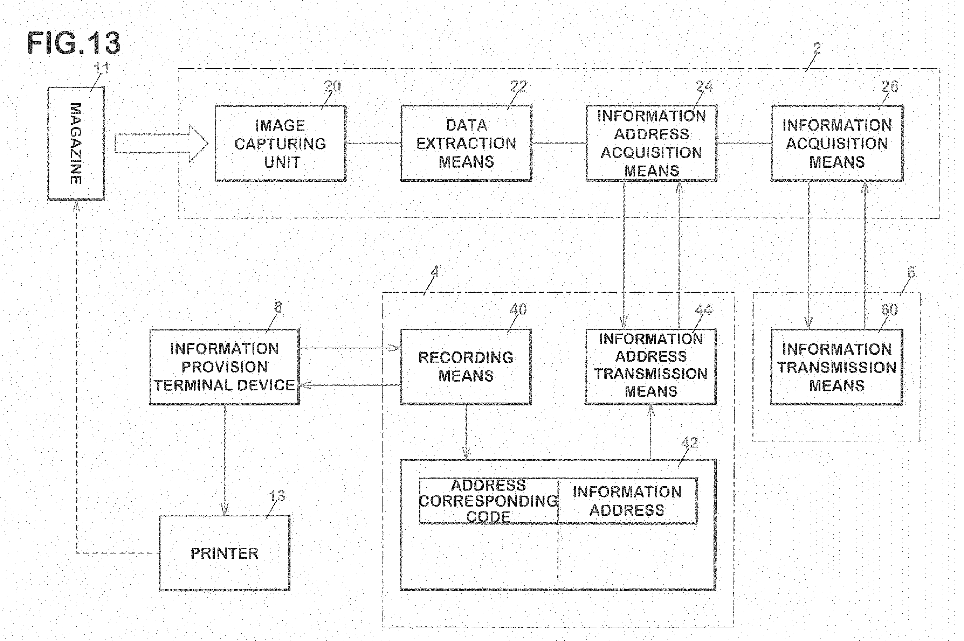

FIG. 13 shows an overall configuration of an information provision system according to a second embodiment. In this embodiment, images printed on such media as the paper are the imaging targets.

The one who provides information operates the information provision terminal device 8 to send, to the management server device 4, an information address of an information provision server device in which the information one desires to provide is recorded. A recording means 40 of the management server device 4 allocates an address corresponding code to the information address that has been received, and records it in a recording unit 42. This address corresponding code is returned to the information provision terminal device 8.

The information provision terminal device 8 that has received the address corresponding code feeds this code to a printer 13. The address corresponding code is embedded in a predetermined image, as a digital watermark, by the printer 13. Further, the printer 13 prints such images as a magazine.

An image of a page of a magazine in which an address corresponding code is embedded is taken by the image capturing unit 20. The data extraction means 22 extracts the address corresponding code that is embedded, as a digital watermark, in the image taken.

The information address acquisition means 24 transmits the extracted address corresponding code to the management server device 4. The information address transmission means 44 of the management server device 4 reads out, from the recording unit 42, the information address that is recorded together with the address corresponding code, and returns it to the information reception terminal device 2.

An information acquisition means 26 of the information reception terminal device 2 accesses the information provision server device 6 on the basis of the information address acquired. An information transmission means 60 of the information provision server device 6 transmits provided information to the information acquisition means 26 of the information reception terminal device 2.

As mentioned above, the address corresponding codes are embedded in magazine photos and the like in advance, such that information relating thereto can be provided when a user captures images of the magazine photos and the like with an information reception terminal device 2 such as a mobile phone.

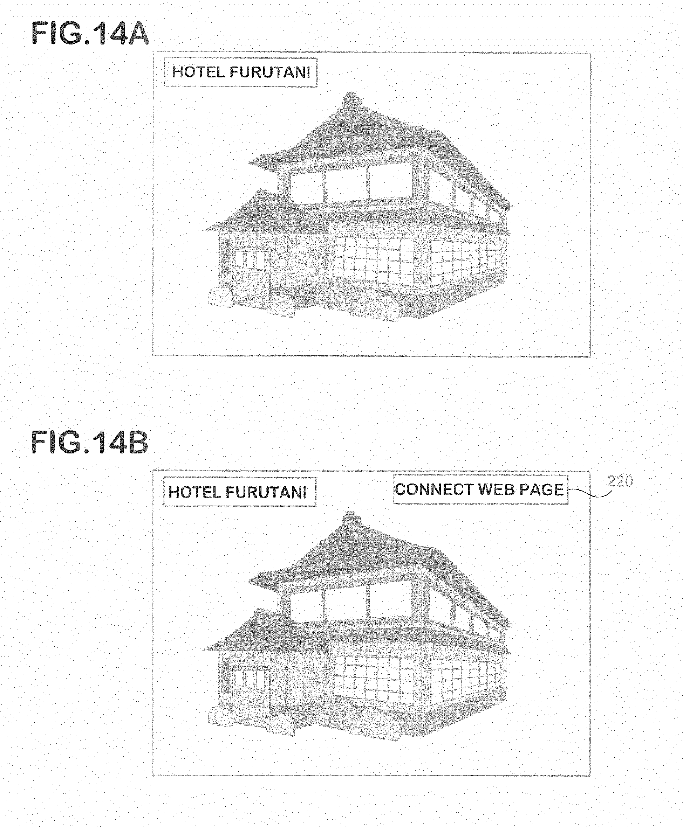

For example, when an address corresponding code is embedded in a magazine photo or the like as that shown in FIG. 14A in advance, and an image of such a photo is captured by the information reception terminal device 2, an image having a link 220 as shown in FIG. 14B can be obtained. By clicking the link 220, website of the hotel shown in the picture can be viewed.

### 2.2 Hardware configuration and process flowchart

The hardware configuration including an information reception terminal device 2, a management server device 4, an information provision server device 6, and an information provision terminal device 8, is the same as that of the first embodiment. In addition, flowcharts for the processes carried out by the devices are also the same as the first embodiment.

### 2.3 Others

(1) In the abovementioned embodiment, while magazine photos were imaging targets, photos in flyers, advertisement on signboards, printed photo stickers (known by the trade name "print club stickers"), and the like may be the imaging targets.

(2) Further, indication of a tag on a brand-name item and a part of a product may also be the imaging targets, for which information relating to that product will be provided. For example, a watermark can be embedded in a tag or the like in advance so as to indicate that the product is a genuine product.

(3) Further, other embodiments according to the first embodiment and the embodiments below are applicable to the present embodiment to the extent that they do not depart from the essence of the embodiment.

### 3. Third Embodiment

### 3.1 Overall configuration

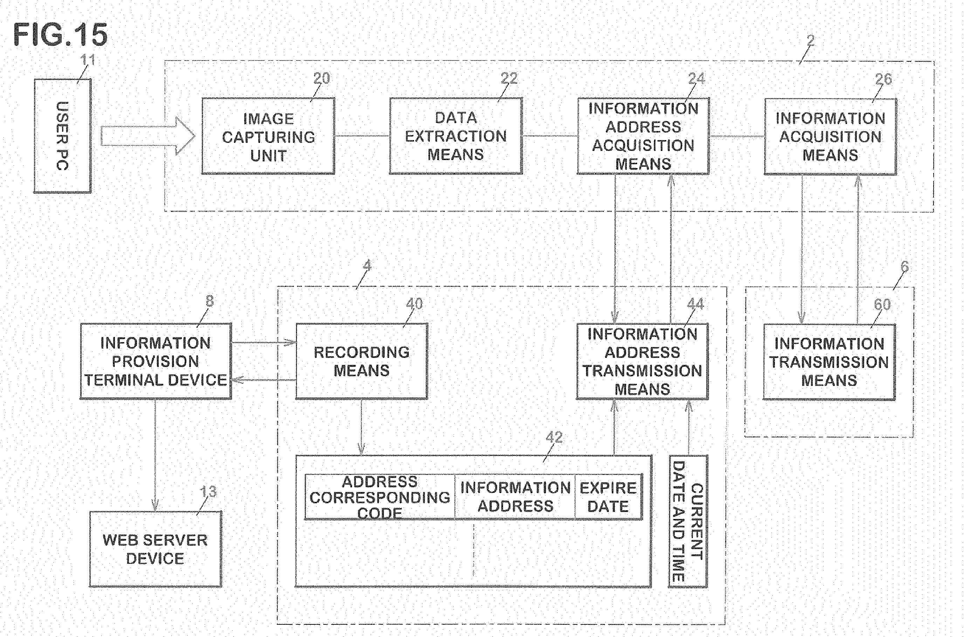

FIG. 15 shows an overall configuration of an information provision system according to a third embodiment. This system is provided with an information reception terminal device 2, a management server device 4, an information provision server device 6, and an information provision terminal device 8.

The one who provides information operates the information provision terminal device 8 to send, to the management server device 4, an information address of an information provision server device in which the information one desires to provide is recorded. At this time, a period for which the information to be provided may be acquired is transmitted together with the information address. For example, if the provided information concerns a discount coupon for purchasing a product or a service, the period for which that service is available is transmitted. A recording means 40 of the management server device 4 allocates an address corresponding code to the information address that has been received, and records the information address and the address corresponding code in a recording unit 42 along with the period therefor. This address corresponding code is returned to the information provision terminal device 8.

The address corresponding code is embedded, as a digital watermark, in such contents as the image, by the information provision terminal device 8 that has received the address corresponding code. This is then uploaded to a web server device 17.

The user PC 15 displays an image uploaded on a web server device 17. Then, an image of the web server device 17 is captured by the image capturing unit 20 of the information reception terminal device 2, through operation of a user. The data extraction means 22 extracts the address corresponding code that is embedded in the image that has been captured, as a watermark.

The information address acquisition means 24 transmits the extracted address corresponding code to the management server device 4. The information address transmission means 44 of the management server device 4 determines whether the current date and time is past the period that is recorded in correlation to the address corresponding code. If the period has expired, the management server device 4 returns that fact to the information reception terminal device 2.

If the period has not expired, the information address transmission means 44 reads out, from the recording unit 42, the information address that is recorded therein together with the address corresponding code, and returns it to the information reception terminal device 2.

If the period has not expired, the information acquisition means 26 of the information reception terminal device 2 accesses the information provision server device 6 on the basis of the information address acquired. The information transmission means 60 of the information provision server device 6 transmits provided information to the information acquisition means 26 of the information reception terminal device 2.

As mentioned above, by embedding the URL corresponding codes in web contents so as to allow a user to capture an image thereof using the information reception terminal device 2 such as a mobile phone, information relating to the web content may be provided for a fixed period.

### 3.2 Hardware configuration and process flowchart

The hardware configuration including an information reception terminal device 2, a management server device 4, an information provision server device 6, and an information provision terminal device 8, is the same as that of the first embodiment. In addition, flowcharts for the processes carried out by the devices are also substantially the same as the first embodiment.

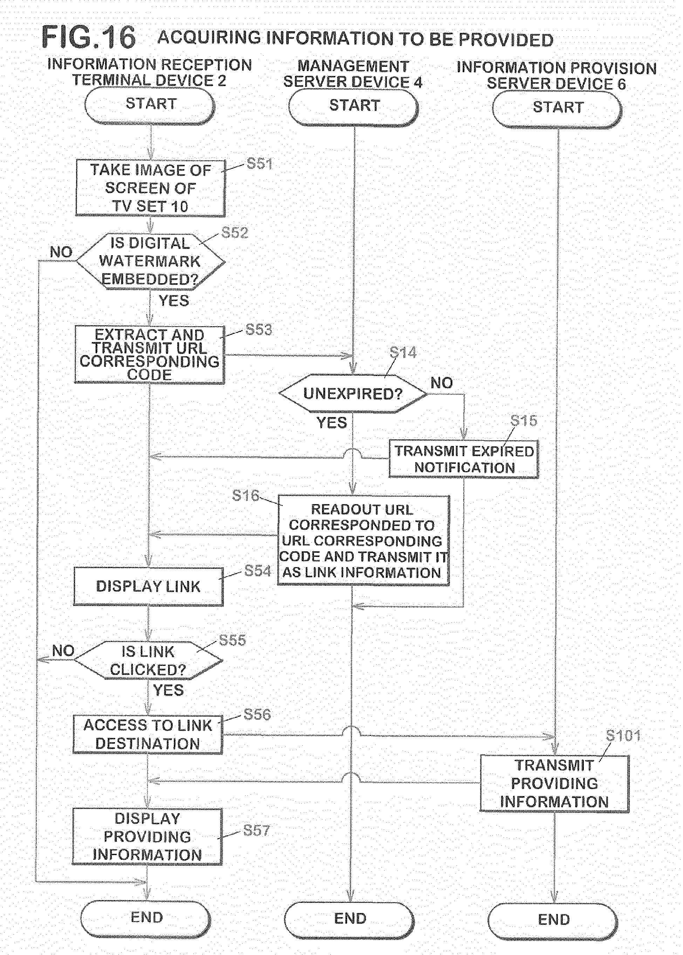

FIG. 16 shows a flowchart for the acquisition process of provided information. Upon receiving the URL corresponding code, the management server device 4 references the correspondence table recorded in the hard disk 56 (refer to FIG. 15), and acquires the period correlated to the URL corresponding code. Further, the management server device 4 acquires the current date and time from an internal calendar circuit to determine whether the period has expired (step S14).

If the period has expired, the management server device 4 transmits to the information reception terminal device 2 an instruction to indicate expiry of the period. If the period has not expired, the URL corresponding to the URL corresponding code is acquired to generate the link information, and management server device 4 transmits the link information to the information reception terminal device 2 (step S16).

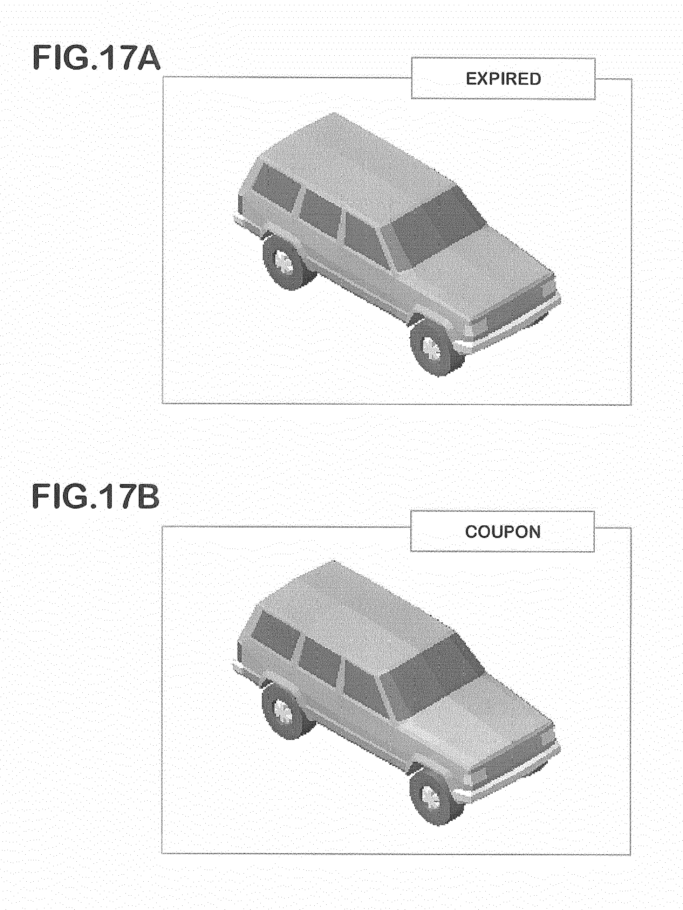

Upon receiving the instruction, display is performed by the information reception terminal device 2 accordingly (step S54). FIG. 17A is a display shown in the case where the period has expired. FIG. 17B is a display shown in the case where the period has not expired.

### 3.3 Others

(1) In the abovementioned embodiment, an expiry period is set. However, a start date and time and an end date and time may be set instead, such that the link information is displayed only during the period (or outside the period).

(2) In the abovementioned embodiment, the current date and time is acquired by the management server device 4. However, the current date and time may be acquired by the information reception terminal device 2 to be sent to the management server device 4, so as to determine whether it is within the expiry period.

In the abovementioned embodiment, a display indicating the expiry of the period is made in the case where the period has expired. However, the management server device 4 may transmit different link information in accordance with the current date and time. For example, information may be registered in advance such that information relating to cherry blossoms is displayed if the current date is April, and information relating to ski is displayed in January, varying the content to be transmitted from the management server device 4 accordingly. Further, provided information may also be varied according to a time of the day.

(4) In the abovementioned embodiment, the URL of the link destination is changed in accordance with the date and time, to vary the content of provided information. However, the link destination may be varied in accordance with user attributes.

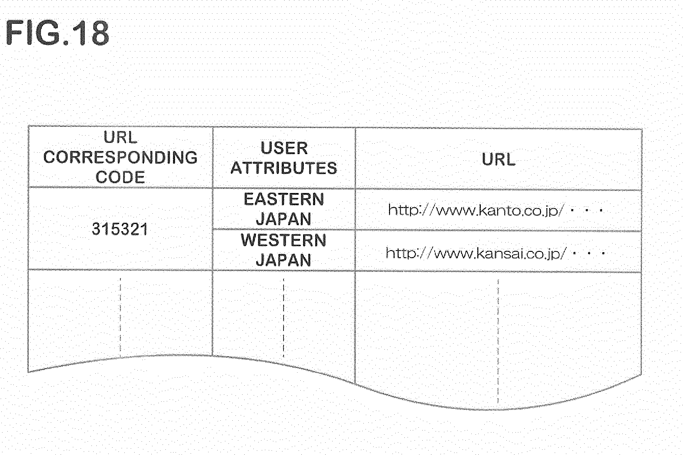

FIG. 18 shows a correspondence table used for changing the URL in accordance with user attributes. This correspondence table has been registered in the management server device 4 by the one who provides information through operation of the information provision terminal device 8.

In this example, a current location of the information reception terminal device 2 (can be acquired via the GPS) is transmitted to the management server device 4 together with the URL corresponding code. On the basis of the current location of the information reception terminal device 2 (that is, the current position of the user), the management server device 4 determines whether the current location is eastern Japan or western Japan, and returns a corresponding URL.

In this way, more preferable information can be acquired on the basis of the current location of the user.

Further, user attributes may include sex, age, address, and mobile phone manufacturer. By recording these user attributes in the management server device 4, it is possible to analyze which contents have been viewed by what kind of users.

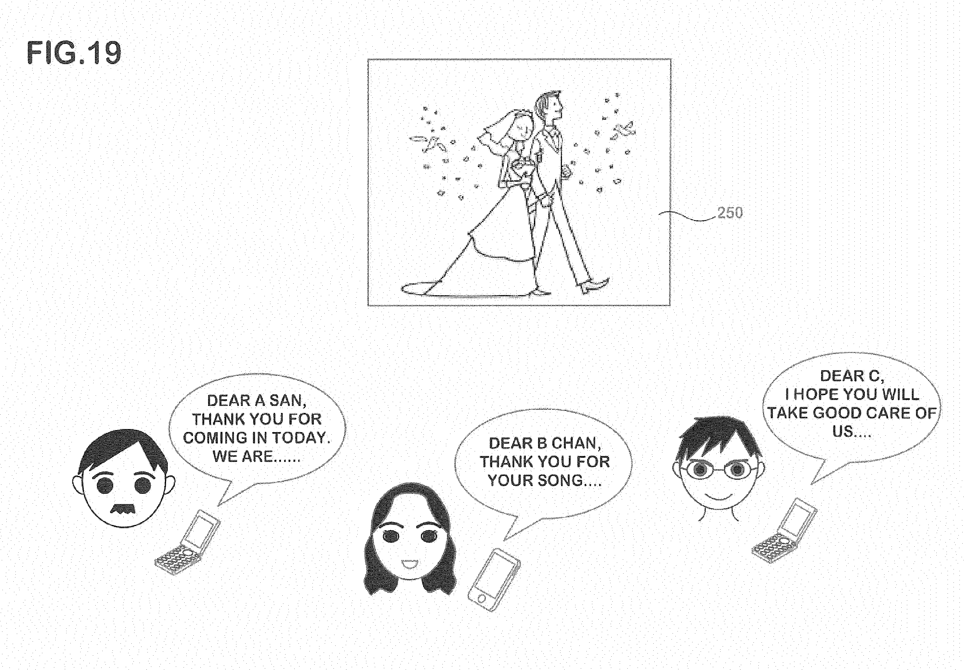

An application of employing user attributes is shown in FIG. 19. At the end of a wedding, a video of a couple who got married is shown on a screen 250. When the attendants capture images of the screen with their mobile phones (information reception terminal device 2), messages for each person will be displayed on the respective mobile phones. This can be realized as described below.

A message (provided information) for each person is recorded in the information provision server device 6, in advance, at different URLs. Further, each person's phone number is recorded in the management server device 4 as the user attribute of the corresponding table in FIG. 18, and URLs of the respective recorded messages correlated to the phone numbers are recorded in advance.

The image projected on the screen 250 has a URL corresponding code embedded therein. Each person captures an image of the screen with one's own mobile phone. The mobile phone extracts the URL corresponding code and transmits the URL corresponding code to the management server device 4 together with the phone number of its own. The management server 4 references the correspondence table, acquires the URL on the basis of the URL corresponding code and the phone number, and returns the link information to the mobile phone. Each person may click the link information to display a message addressed to him/her on one's own mobile phone.

(5) In the abovementioned embodiment, the management server device 4 transmits different URLs on the basis of the user attributes and the current date and time received. However, the management server device 4 may transmit the same URL regardless of the user attributes and the current date and time, and record the user attributes and the current date and time. In this way, it will be possible to analyze what kind of a user captured an image of the target and when.

(6) In the abovementioned embodiment, different URLs are transmitted to the information reception terminal device 2 on the basis of the user attributes and the current date and time. However, user attributes and the like may be transmitted when the information reception terminal device 2 accesses the information provision server device 6, and accordingly, the information provision server device 6 may vary the provided information on the basis of the user attributes and the current date and time.

(7) Further, other embodiments according to the first embodiment, the second embodiment, and the embodiments below are applicable to the present embodiment to the extent that they do not depart from the essence of the embodiment.

### 4. Fourth Embodiment

### 4.1 Overall configuration

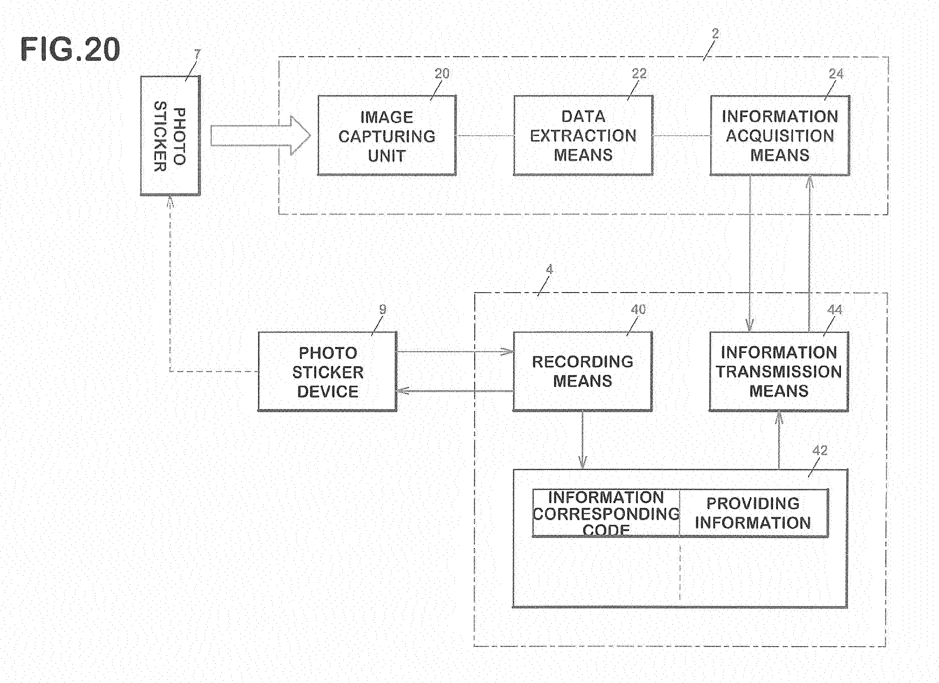

FIG. 20 shows an overall configuration of an information provision system according to a fourth embodiment. This system is provided with an information reception terminal device 2, a management server device 4, and a photo sticker device 9.

In each of the abovementioned embodiments, the URL representing the recorded information that is to be provided is correlated with the URL corresponding code, and is transmitted to the information reception terminal device 2. In the present embodiment, an information corresponding code is embedded in the image as a digital watermark in advance, and provided information is correlated with the information corresponding code to be transmitted to the information reception terminal device 2. That is, provided information is directly transmitted, without using the URL.

The photo sticker device 9 is a device for capturing an image of a user and printing out the image as a sticker. In this embodiment, the user may input a message (provided information) after capturing an image. The photo sticker device 9 transmits the input message to the management server device 4. The recording means 40 of the management server device 4 correlates an information corresponding code to the received message, and records it in the recording unit 42. This information corresponding code is returned to the photo sticker device 9.

When the information corresponding code is received by the photo sticker device 9, the information corresponding code is embedded, as a digital watermark, in the image that has been taken. Further, the photo sticker device 9 prints, as a photo sticker 7, the image that has been taken, the image having an information corresponding code embedded therein.

An image of the photo sticker 7 having an information corresponding code embedded therein is captured by the image capturing unit 20 of the information reception terminal device 2. The data extraction means 22 extracts the information corresponding code that is embedded, as a digital watermark, in the image that has been captured.

The information acquisition means 26 transmits the information corresponding code that has been extracted to the management server device 4. The information transmission means 44 of the management server device 4 reads out, from the recording unit 42, a message (provided information) that is recorded together with the information corresponding code, and transmits the message to the information reception terminal device 2. The information reception terminal device 2 displays this message.

In this way, one can give a photo sticker having a message embedded therein to a friend, or the like.

### 4.2 Hardware configuration

Hardware configurations of the information reception terminal device 2 and the management server device 4 are the same as those of the first embodiment.

### 4.3 Process flowchart

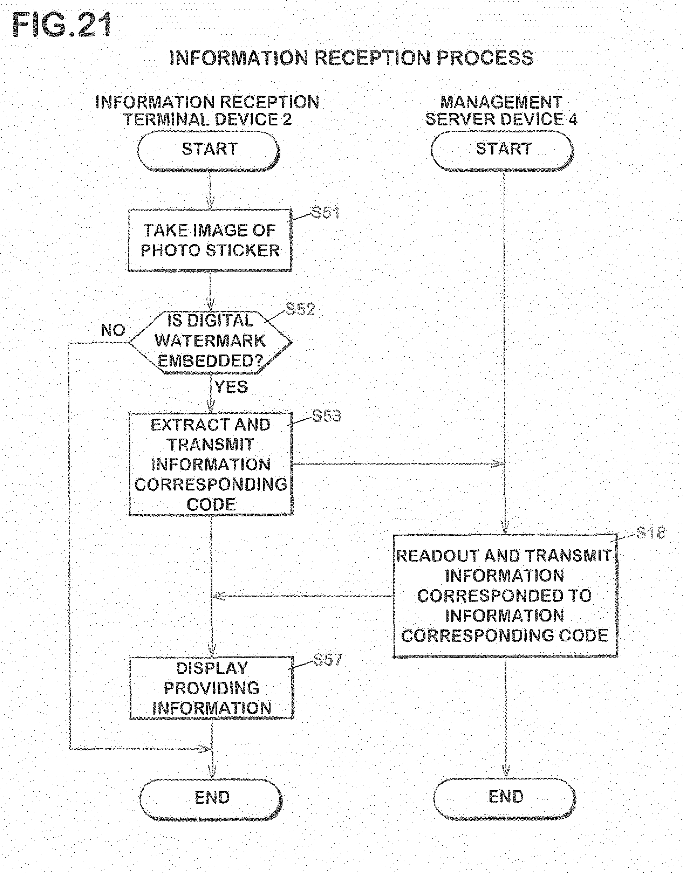

FIG. 21 shows a flowchart for the information reception process. First, an image of a photo sticker 7 is captured by the information reception terminal device 2 (step S51). Then, the information reception terminal device 2 determines whether a digital watermark can be acquired (step S52). If a digital watermark cannot be acquired, the process is terminated.

If a digital watermark can be acquired, the information corresponding code that has been extracted as a digital watermark is transmitted to the management server device 4 (step S53). Upon receiving the information corresponding code, the management server device 4 references the correspondence table recorded in the hard disk 56, and reads out a message (provided information) corresponding thereto. Further, this message is transmitted to the information reception terminal device 2 (step S18).

The information reception 2 that has received the message will display the message (step 57).

### 4.4 Others

(1) In the abovementioned embodiment, the photo stickers are the imaging targets. However, an imaging target may be a video image that has been captured and that has an information corresponding code embedded therein. In this case, for example, provided information may include the date and place the image was taken.

(2) In the abovementioned embodiment, the information corresponding code was embedded in the photo sticker. However, the information corresponding code may also be embedded in a photo data that is transmitted to the user terminal device from the photo sticker device.

(3) In this embodiment, the information corresponding code is embedded instead of the information address corresponding code. The embedding of the information corresponding code can be applied to the first, the second, and the third embodiments, and the fifth embodiment and so forth.

(4) Further, other embodiments according to the first, the second, the third embodiment, and the embodiments below are applicable to the present embodiment to the extent that they do not depart from the essence of the embodiment.

### 5. Fifth Embodiment

### 5.1 Overall configuration

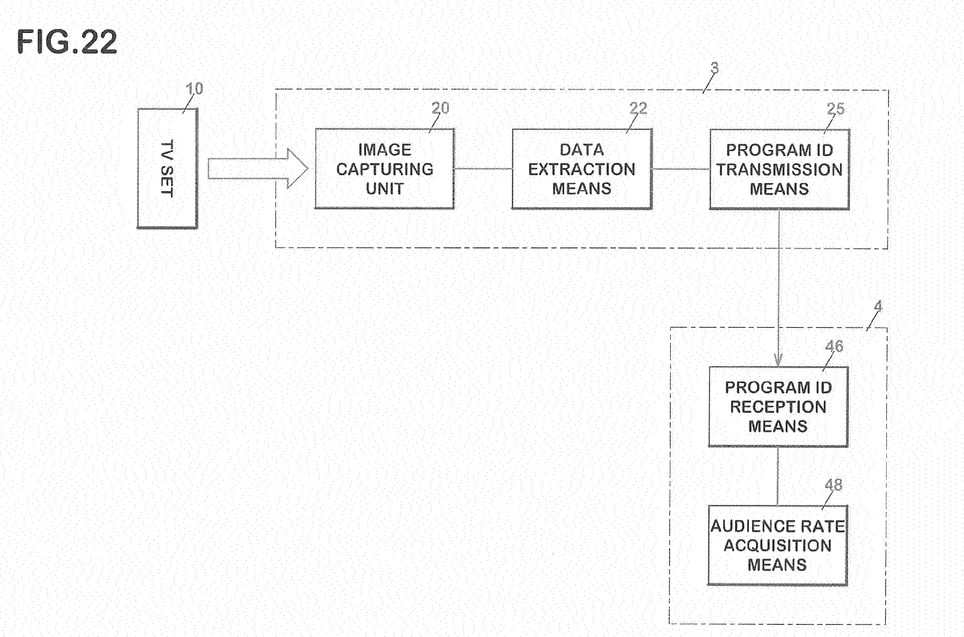

FIG. 22 shows an audience rate calculation system according to a fifth embodiment. A program ID for identification is embedded in a TV program as a digital watermark. The TV set 10 shows video of the program. An image of the video is taken by an image capturing unit 20 of a user terminal device (a mobile phone and the like). The data extraction means 22 will extract the program ID embedded in the image of the program. The program ID transmission means 25 transmits the extracted program ID to the management server device 4.

The program ID reception means 46 of the management server device 4 receives a program ID. The audience rate is calculated by the audience rate calculation means 48 on the basis of the program ID received. Further, the audience rate can be obtained by adding the program ID sent from many other user terminal devices 3, and calculating their rates.

### 5.2 Others

(1) In the abovementioned embodiment, the audience rate is measured. However, advertisement effect may be measured by embedding an advertisement ID in the advertisement image.

(2) When transmitting the program ID to the management server device 4 from the user terminal device 3, the user attributes may be transmitted together. On the basis of this, the management server device 4 may analyze what kinds of users are watching the program.

(3) Further, other embodiments according to the first, the second, the third embodiment, the fourth, and the embodiments below are applicable to the present embodiment to the extent that they do not depart from the essence of the embodiment.

### 6. Sixth Embodiment

### 6.1 Overall configuration

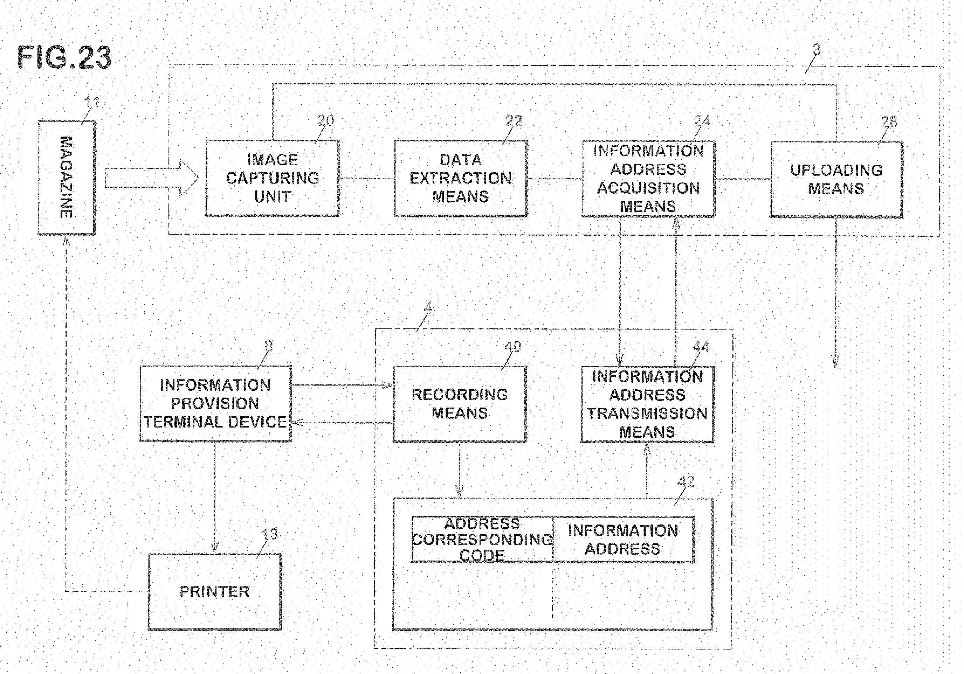

FIG. 23 shows an overall configuration of an information provision system according to a fourth embodiment. In this embodiment, when uploading the image that has been captured with the user terminal device 3 to a user's blog or the like, link information for the image can be automatically generated therefor. For example, when posting an article for introducing a shop in a magazine or the like, the address corresponding code is embedded in the photograph in advance. When a user captures an image of the photograph and uploads it in one's blog, a link for the HP of the shop is automatically generated.

The one who provides information operates the information provision terminal device 8 to transmit, to the management server device 4, an information address of an information provision server device in which the information one desires to provide is recorded. A recording means 40 of the management server device 4 allocates an address corresponding code to the information address that has been received, and records the information address and the address corresponding code in a recording unit 42. This address corresponding code is returned to the information provision terminal device 8.

The information provision terminal device 8 that has received the address corresponding code feeds this code to a printer 13. The address corresponding code is embedded in a predetermined image, as a digital watermark, by the printer 13. Further, the printer 13 prints such images as a magazine.

An image of a page of a magazine in which an address corresponding code is embedded is captured by the image capturing unit 20. The data extraction means 22 extracts the address corresponding code that is embedded, as a digital watermark, in the captured image.

The information address acquisition means 24 transmits the extracted address corresponding code to the management server device 4. The information address transmission means 44 of the management server device 4 reads out, from the recording unit 42, the information address that is recorded together with the address corresponding code, and returns the information address and the address corresponding code to the user terminal device 3.

An upload means 28 of the user terminal device 3 pastes the abovementioned information address, as link information, on the image captured with the image capturing unit 20, and transmits it to a server device that keeps record of the user's blog.

### 6.2 Others

(1) In the abovementioned embodiment, the magazines were the imaging targets. However, surface of a product, TV screen, and the like may also be the imaging targets.

(2) Further, other embodiments according to the first, the second, the third, the fourth, the fifth, and the embodiments below are applicable to the present embodiment to the extent that they do not depart from the essence of the embodiment.

### 7. Seventh Embodiment

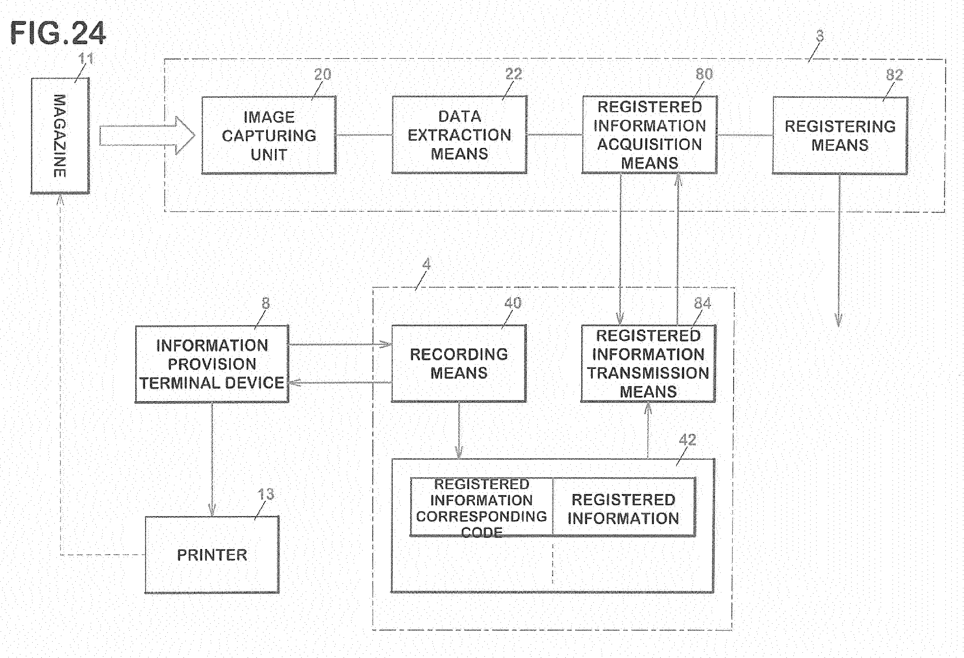

FIG. 24 shows an overall configuration of an information provision system according to a fourth embodiment. In this embodiment, an image taken by the user terminal device 3 can be registered on an SNS (social networking service) page of a user. For example, when posting a photograph introducing a product in magazines or the like, a registered information corresponding code is embedded in that photograph in advance. When a user captures an image of the photograph with the user terminal device 3, a registration confirm button is displayed. If the user clicks this button the photograph introducing the product will be automatically registered on the SNS page of that user.

The one who provides registered information operates the information provision terminal device 8 to transmit, to the management server device 4, a registered information (here, a photograph introducing a product, or the like). The recording means 40 of the management server device 4 allocates a registered information corresponding code to the registered information that has been received, and records it in the recording unit 42. This registered information corresponding code is returned to the information provision terminal device 8.

The information provision terminal device 8 that has received the registered information corresponding code feeds this code to the printer 13. The registered information corresponding code is embedded in a predetermined image (in this case, a photograph introducing a product, as described above), as a digital watermark, by the printer 13. Further, the printer 13 prints such images as a magazine.

An image of a page of a magazine in which the registered information corresponding code is embedded is captured by the image capturing unit 20. The data extraction means 22 extracts the registered information corresponding code that is embedded, as a digital watermark, in the captured image.

A registered information acquisition means 80 transmits the extracted registered information corresponding code to the management server device 4. A registered information transmission means 84 of the management server device 4 reads out, from the recording unit 42, the registered information that is recorded together with the registered information corresponding code, and returns it to the user terminal device 3.

A registering means 82 of the user terminal device 3 transmits this registered information to a web server device of the SNS and registers it on the SNS page of the user.

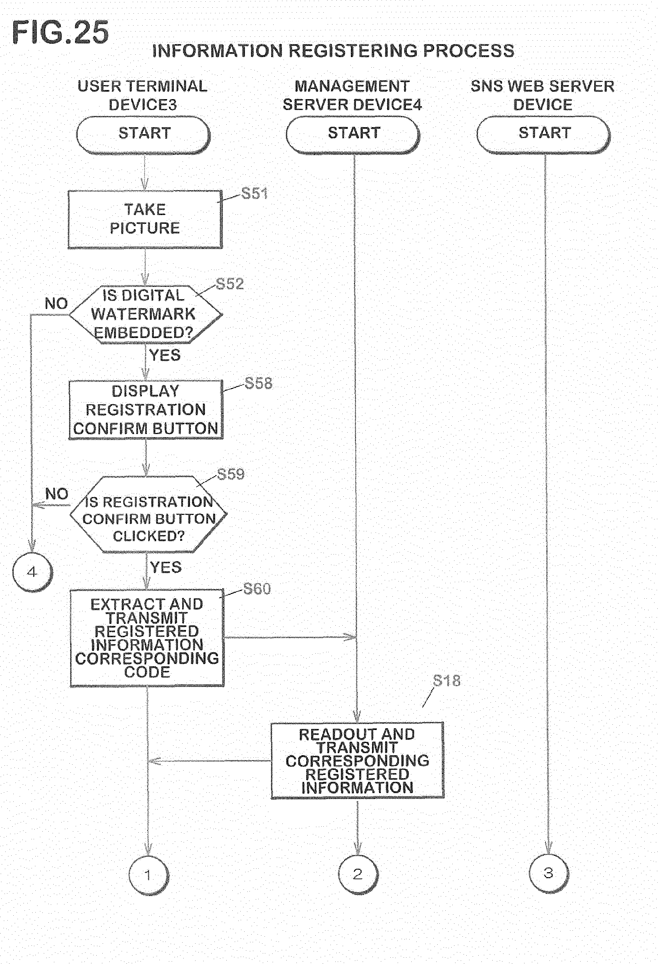

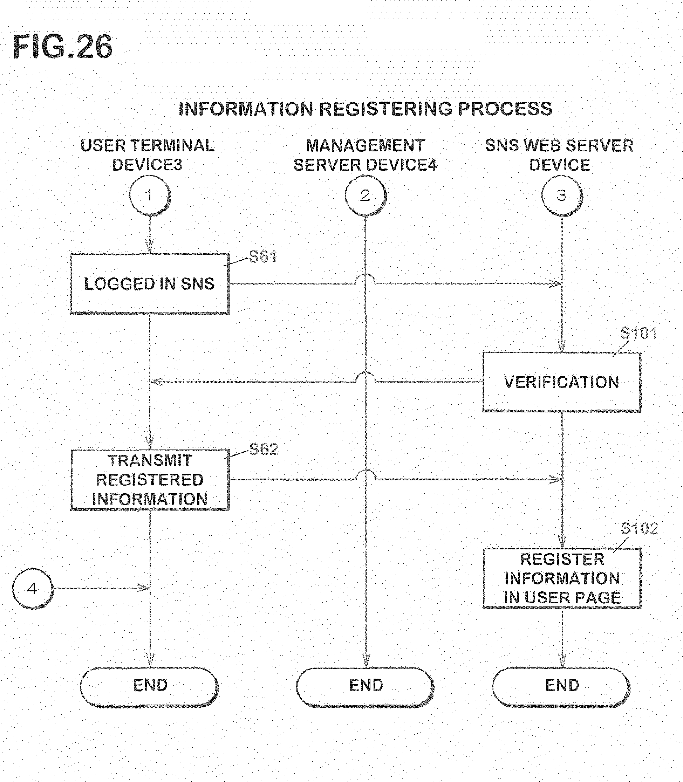

FIG. 25 and FIG. 26 show flowcharts for the user terminal device 3, a server program of the management server device 4, and a server program of an SNS web server device.

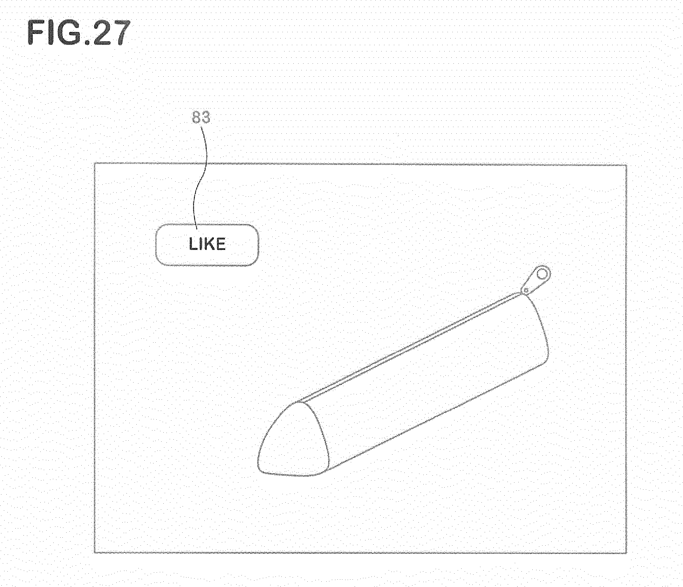

By operation of a user, the image capturing unit 20 of the user terminal device 3 captures an image of a picture of a product or the like in a magazine (step S51). The user terminal device 3 determines whether a digital watermark is embedded in the captured image (step S52) . If a digital watermark is not embedded, information registering process is not executed. If a digital watermark is embedded, a registration confirm button 83 is displayed on the touch screen 32 of the user terminal device 3, as shown in FIG. 27 (step S58). In this embodiment, a "like" button is displayed as the registration confirm button 83.

The user terminal device determines whether this registration confirm button 83 has been clicked by the user (step S59) . If the button has been clicked, the user terminal device 3 extracts the registered information corresponding code embedded as the digital watermark and transmits the registered information corresponding code to the management server device 4 (step S60).

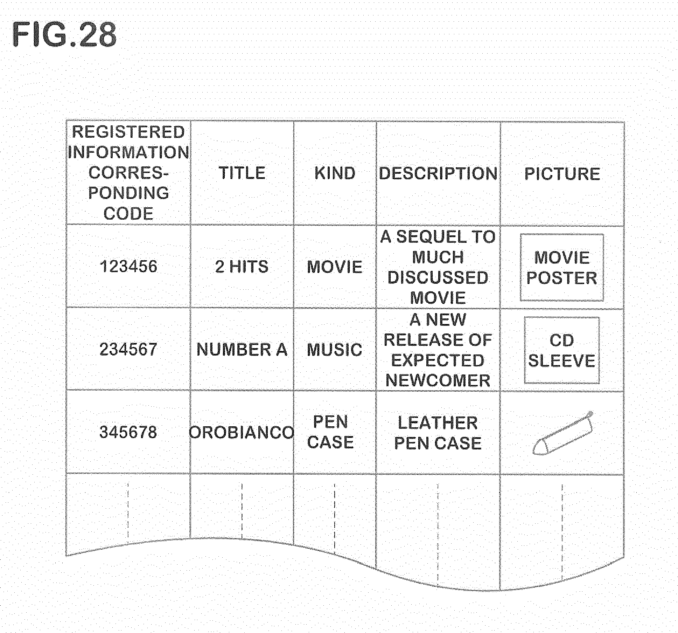

The management server device 4 reads out the registered information corresponding to the registered information corresponding code recorded in the hard disk 56 and transmits the registered information to the user terminal device 3. FIG. 28 shows an example of registered information and registered information corresponding code that are recorded in the hard disk 56 of the management server device 4. In this example, photographs, titles, kinds, descriptions, and the like are recorded as the registered information. Further, the page of a magazine in which the registered information corresponding code is embedded can be in accordance with a generally used protocol (for example, the Open Graph Protocol) for the user terminal device 3, and the items for registered information may also be in accordance with the items specified by the protocol.

The user terminal device 3 which has received the registered information accesses the predetermined SNS web server device and requests to login (step S61). At that time, the user terminal device 3 reads out the login information of the user (user name, password, and the like) recorded in the non-volatile memory 38 and requests to login with the login information.

The SNS web server performs authentication on the basis of login information transmitted thereto (step S101). If the user name and the password are correct, the SNS web server transmits by return to the user terminal device 3 of the fact that authentication has been successful.

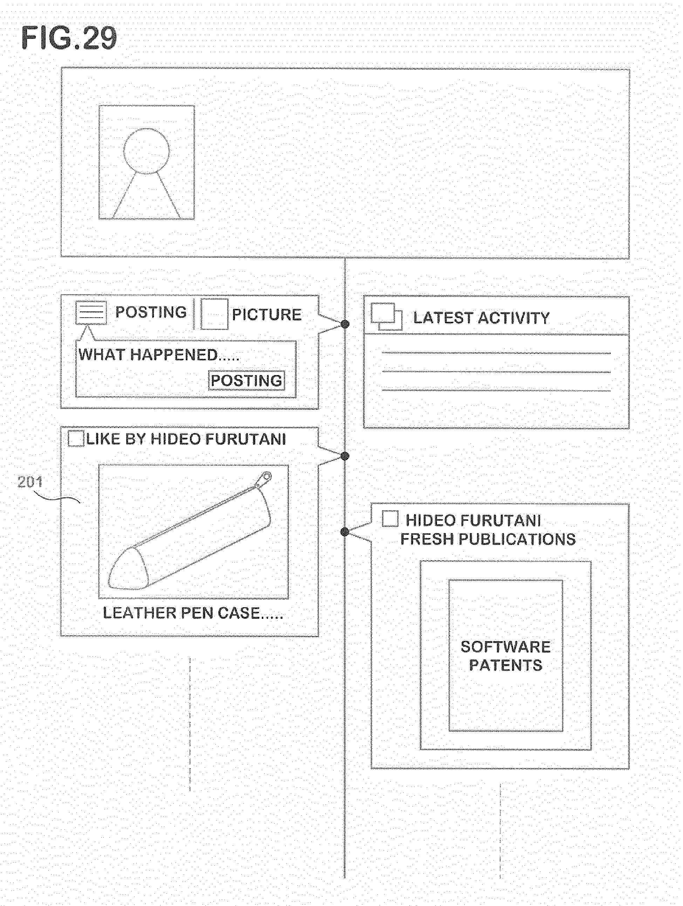

Upon receiving the notification of successful authentication, the user terminal device 3 transmits the registered information acquired from the management server device 4 to the SNS web server device (step S62). The SNS web server device registers this registered information on the SNS page of the user. In this way, as shown in FIG. 29, an article structured on the basis of registered information is registered on the SNS page of the user.

### Others

(1) In the abovementioned embodiment a magazine is the imaging target and a digital watermark is embedded therein. However, a surface of a product, a TV screen, and the like may be imaging targets, and digital watermark may be embedded therein.

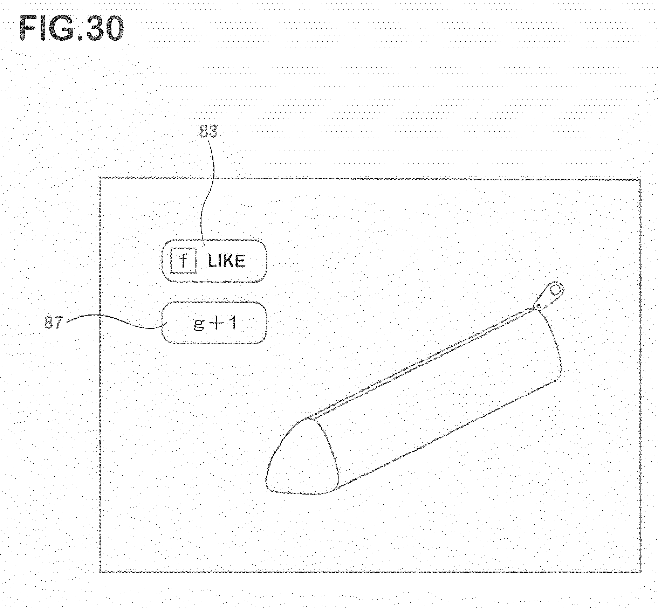

(2) In the abovementioned embodiment, there is only one SNS web server designated as the registration destination. However, as shown in FIG. 30, registration buttons for a plurality of SNS web servers may be displayed in step S58. A button 83 is a registration button for Facebook (trademark), whereas a button 87 is a registration button for Google+ (trademark). The user terminal device 3 determines which SNS web server to register in depending on which button has been clicked.

Further, in the case where different sets of registered information are used depending on the SNS web server device of registration destination (for example, items are different), a plurality of registered information (including identification codes indicating which SNS server is the registration destination) may be embedded as watermark data such that the different sets of registered information can be selectively used depending on which button has been clicked.

(3) In the abovementioned embodiment, registered information including photographs and the like are transmitted from the user terminal device 3 to the SNS web server device. However, information such as photographs and IDs associated therewith may be recorded on the side of the SNS web server device in advance, and the IDs may be transmitted from the user terminal device 3 to the SNS web server device 4. In that case, the IDs are recorded in the hard disk 56 of the management sever device 4 in association with the registered information corresponding code.

(4) In the abovementioned embodiment, programs as shown in FIG. 25 and FIG. 26 are recorded in the user terminal device 3 in advance. However, the entire program or a part thereof may be included in the registered information transmitted from the management server device 4 to the user terminal device 3. For example, a program for executing Steps S61 and S62 in FIG. 26 may be transmitted, as a JavaScript (trademark), from the management server device 4 in step S18 of FIG. 25.

(5) In the abovementioned embodiment, photographs that have been prepared and recorded in advance are registered in the SNS web server device. However, a photograph taken in step S51 may also be registered in the SNS web server device.

(6) Further, other embodiments according to the first, the second, the third, the fourth, the fifth, and the sixth embodiments are applicable to the present embodiment to the extent that they do not depart from the essence of the embodiment.

### 8. Others

(1) In each of the abovementioned embodiments, corresponding codes are embedded as the digital watermark. However, the provided information itself may be embedded as the digital watermark. For example, description and voice data can be embedded in a picture book such that description may be displayed or listened to the voice data when capturing an image with a mobile phone, or the like.

(2) Imaging targets in each of the embodiments can be applied in combination. For example, the imaging target in the third embodiment may be a TV screen in the first embodiment.

(3) In each of the abovementioned embodiments, the corresponding codes are generated by the management server device 4. However, the corresponding codes may be generated on the side of the information provision terminal device and transmitted to the management server 4 in pairs with the information address.

(4) In each character font data, the code for the respective fonts may be embedded as the digital watermark. In this way, character codes can be surely recoverable without a complex processing such as OCR.

(5) In each of the abovementioned embodiments, data is the provided information. However, a program may be the provided information.

## Claims

1. An information provision system provided with an information reception terminal device; an information provision terminal device; a management server device; and an information provision server device, wherein
the information reception terminal device comprises:
an image capturing unit that captures an image of an imaging target having a watermark data embedded therein;
a watermark data extraction means for extracting watermark data from an image data which has been obtained by capturing an image of an imaging target by the image capturing unit;
an information address acquisition means for acquiring an information address corresponding to the extracted watermark data from the management server; and
an information acquisition means for acquiring information from the information provision server on the basis of the acquired information address, and
the management server device comprises:
a recording means for receiving, from the information provision terminal device, the information address of the recorded information and recording the information address in a recording unit in association with a watermark data that is embedded in the imaging target; and
an information address transmission means for, upon receiving a watermark data from the information reception terminal device, referencing the recording unit and acquiring the information address corresponding to the watermark data and by return transmitting the information address to the information reception terminal device, and
the information provision server device is provided with an information transmission means for transmitting information corresponding to the watermark data to the information reception terminal device in response to access from the information reception terminal device.

2. An information reception terminal device, comprising:
an image capturing unit that captures an image of an imaging target having a watermark data embedded therein;
a watermark data extraction means for extracting watermark data from an image data which has been obtained by capturing an image of an imaging target by the image capturing unit;
an information address acquisition means for acquiring an information address corresponding to the extracted watermark data from a management server; and
an information acquisition means for acquiring information from an information provision server on the basis of the acquired information address.

3. An information reception terminal program for realizing an information reception terminal device by a computer, whereby the computer is made to function as
a watermark data extraction means for extracting watermark data from an image data which has been obtained by capturing, by an image capturing unit, an image of an imaging target having watermark data embedded therein;
an information address acquisition means for acquiring an information address corresponding to the extracted watermark data from a management server; and
an information acquisition means for acquiring information from an information provision server on the basis of the acquired information address.

4. A management server device, comprising:
a recording means for receiving, from an information provision terminal device, an information address of the recorded information and recording the information address in a recording unit in association with a watermark data that is embedded in an imaging target; and
an information address transmission means for, upon receiving a watermark data from the information reception terminal device, referencing the recording unit and acquiring the information address corresponding to the watermark data and by return transmitting the information address to the information reception terminal device.

5. A management server program for realizing a management server device by a computer, whereby the computer is made to function as
a recording means for receiving, from an information provision terminal device, an information address of the recorded information and recording the information address in a recording unit in association with a watermark data that is embedded in an imaging target; and
an information address transmission means for, upon receiving a watermark data from the information reception terminal device, referencing the recording unit and acquiring the information address corresponding to the watermark data and by return transmitting the information address to the information reception terminal device.

6. The system, device, or program according to any one of claims 1 to 5, wherein
the imaging target having a watermark data embedded therein is a content displayed on a display.

7. The system, device, or program according to claim 6, wherein
the content displayed on the display is an image captured by a photo sticker device, and
the information address is an address of an information provision server device that provides data input by a user on the photo sticker device.

8. The system, device, or program according to claim 6, wherein
the content displayed on the display is an image captured by a video camera, and
the information address is an address of an information provision server device that provides data input by a user regarding the image captured by the video camera, a date and time of recording the video, or a place of recording the video.

9. The system, device, or program according to any one of claims 1 to 5, wherein
the imaging target having a watermark data embedded therein is a broadcast content displayed on a TV set.

10. The system, device, or program according to claim 9, wherein
the broadcast content is an animation (anime),
the information reception terminal device is a game device, and
the watermark data contain a description of the information address of an information provision server device that allows access to in-game items relating to the animation.

11. The system, device, or program according to claim 9, wherein
the broadcast content includes appearances of actors or broadcasters, and
the watermark data contain a description of the information address of an information provision server device of a store that sells outfits of the actors or broadcasters.

12. The system, device, or program according to claim 9, wherein
the broadcast content is a broadcast content in which cuisines appear, and
the watermark data contain a description of the information address of an information provision server that provides recipes for the cuisines.

13. The system, device, or program according to any one of claims 1 to 12, wherein
the information address transmission means of the management server device transmits, to the information reception terminal device, different information addresses for the same watermark data in accordance with a current date and time.

14. The system, device, or program according to any one of claims 1 to 12, wherein
the information provision server device varies a content of provided information in accordance with a current date and time of receipt of a request.

15. The system, device, or program according to any one of claims 1 to 12, wherein
the information address acquisition means of the information reception terminal device transmits, at a time of transmitting the watermark data to the management server so as to acquire the information address corresponding to the watermark data, user attributes of the information reception terminal device together with the watermark data, and
the information address transmission means of the management server device transmits, to the information reception terminal device, different information addresses for the same watermark data in accordance with the user attributes.

16. The system, device, or program according to claim 15, wherein
the user attributes include one of sex, age, occupation, address, and current location of the information reception terminal device of a user.

17. An audience rate calculation system provided with a user terminal device and a management server device, wherein
the user terminal device comprises:
an image capturing unit that captures an image of a broadcast content having embedded therein a watermark data containing description of a program ID for identifying a program;
a watermark data extraction means for extracting the watermark data to acquire the program ID from an image data which has been obtained by capturing an image of the broadcast content by the image capturing unit; and
a program ID transmission means for transmitting the acquired program ID to the management server device, and
the management server device comprises:
a program ID reception means for receiving the program ID from the user terminal device; and
an audience rate acquisition means for executing a process for calculating an audience rate on the basis of the program ID.

18. A user terminal device, comprising:
an image capturing unit that captures an image of a broadcast content having embedded therein a watermark data containing description of a program ID for identifying a program;
a watermark data extraction means for extracting the watermark data to acquire the program ID from an image data which has been obtained by capturing an image of the broadcast content by the image capturing unit; and
a program ID transmission means for transmitting the acquired program ID to the management server device so as to execute a process for calculating an audience rate therein.

19. A user program for realizing a user terminal device by a computer, whereby the computer is made to function as
an image capturing unit that captures an image of a broadcast content having embedded therein a watermark data containing description of a program ID for identifying a program;
a watermark data extraction means for extracting the watermark data to acquire the program ID from an image data which has been obtained by capturing an image of the broadcast content by the image capturing unit; and
a program ID transmission means for transmitting the acquired program ID to the management server device such that the management server device may execute a process for calculating an audience rate therein.

20. An information provision system provided with an information reception terminal device; an information provision terminal device; and a management server device, wherein
the information reception terminal device comprises:
an image capturing unit that captures an image of an imaging target having a watermark data embedded therein;
a watermark data extraction means for extracting watermark data from an image data which has been obtained by capturing an image of an imaging target by the image capturing unit; and
an information acquisition means for acquiring provided data corresponding to the extracted watermark data from the management server; and
the management server device comprises:
a recording means for receiving, from the information provision terminal device, the provided information and recording the provided information in a recording unit in association with a watermark data that is embedded in the imaging target; and
an information transmission means for, upon receiving a watermark data from the information reception terminal device, referencing the recording unit and acquiring the provided information corresponding to the watermark data and by return transmitting the provided information to the information reception terminal device,
the information transmission means of the management server device varying a content of provided information in accordance with a current date and time.

21. A management server device, comprising:
a recording means for receiving, from an information provision terminal device, provided information and recording the provided information in a recording unit in association with a watermark data that is embedded in an imaging target; and
an information transmission means for, upon receiving the watermark data from the information reception terminal device, referencing the recording unit and acquiring the provided information corresponding to the watermark data and by return transmitting the provided information to the information reception terminal device, wherein
the information transmission means varies a content of provided information in accordance with a current date and time.

22. A management server program for realizing a management server device by a computer, whereby the computer is made to function as
a recording means for receiving, from an information provision terminal device, provided information and recording the provided information in a recording unit in association with a watermark data that is embedded in an imaging target; and
an information transmission means for, upon receiving the watermark data from the information reception terminal device, referencing the recording unit and acquiring the provided information corresponding to the watermark data and by return transmitting the provided information to the information reception terminal device, wherein
the information transmission means varies a content of provided information in accordance with a current date and time.

23. An information provision system provided with an information reception terminal device; an information provision terminal device; and a management server device, wherein
the information reception terminal device comprises:
an image capturing unit that captures an image of an imaging target having a watermark data embedded therein;
a watermark data extraction means for extracting watermark data from an image data which has been obtained by capturing an image of an imaging target by the image capturing unit; and
an information acquisition means for acquiring, from the management server, provided information corresponding to the watermark data and user attributes by transmitting, to the management server device, the extracted watermark data and the user attributes of the information reception terminal device; and
the management server device comprises:
a recording means for receiving, from the information provision terminal device, the provided information corresponding to user attributes and recording the provided information in a recording unit in association with the watermark data that is embedded in the imaging target; and
an information transmission means for, upon receiving the watermark data and the user attributes from the information reception terminal device, referencing the recording unit and acquiring the provided information corresponding to the watermark data and the user attributes and by return transmitting the provided information to the information reception terminal device.

24. An information reception terminal device comprising:
an image capturing unit that captures an image of an imaging target having a watermark data embedded therein;
a watermark data extraction means for extracting watermark data from an image data which has been obtained by capturing an image of an imaging target by the image capturing unit; and
an information acquisition means for acquiring, from the management server, provided information corresponding to the watermark data and user attributes by transmitting, to the management server device, the extracted watermark data and the user attributes of the information reception terminal device.

25. An information reception terminal program for realizing an information reception terminal device by a computer, whereby the computer is made to function as
a watermark data extraction means for extracting watermark data from an image data which has been obtained by capturing, by an image capturing unit, an image of an imaging target having watermark data embedded therein; and
an information acquisition means for acquiring, from the management server, provided information corresponding to the watermark data and user attributes by transmitting, to the management server device, the extracted watermark data and the user attributes of the information reception terminal device.

26. A management server device, comprising:
a recording means for receiving, from an information provision terminal device, provided information corresponding to user attributes and recording the provided information in a recording unit in association with a watermark data that is embedded in the imaging target; and
an information transmission means for, upon receiving the watermark data and the user attributes from the information reception terminal device, referencing the recording unit and acquiring the provided information corresponding to the watermark data and the user attributes and by return transmitting the provided information to the information reception terminal device.

27. A management server program for realizing a management server device by a computer, whereby the computer is made to function as
a recording means for receiving, from an information provision terminal device, provided information corresponding to user attributes and recording the provided information in a recording unit in association with a watermark data that is embedded in the imaging target; and
an information transmission means for, upon receiving the watermark data and the user attributes from the information reception terminal device, referencing the recording unit and acquiring the provided information corresponding to the watermark data and the user attributes and by return transmitting the provided information to the information reception terminal device.

28. The system, device, or program according to any one of claims 23 to 27, wherein
the user attributes include one of sex, age, occupation, address, and current location of the information reception terminal device of a user.

29. The system, device, or program according to any one of claims 23 to 27, wherein
the imaging target having a watermark data embedded therein is a content displayed on a display.

30. The system, device, or program according to claim 29, wherein
the content displayed on the display is an image captured by a photo sticker device, and
the provided information is a data input by a user on the photo sticker device.

31. The system, device, or program according to claim 29, wherein
the content displayed on the display is an image captured by a video camera, and
the provided information is a data input by a user regarding the image captured by the video camera, a date and time of recording the video, or a place of recording the video.

32. The system, device, or program according to any one of claims 23 to 28, wherein
the imaging target having a watermark data embedded therein is a broadcast content displayed on a TV set.

33. The system, device, or program according to any one of claims 1 to 5, and claims 23 to 27 wherein
the imaging target having a watermark data embedded therein is printed on a magazine, a flyer, a newspaper, a book, or a poster.

34. The system, device, or program according to any one of claims 1 to 5, and claims 23 to 27 wherein
the imaging target having a watermark data embedded therein is a part of a product or a tag of a product, and
the provided information is information indicating that the product is a genuine product.

35. An information provision system provided with a user terminal device; an information provision terminal device; a management server device; an information provision server; and a web server device, wherein
the user terminal device comprises:
an image capturing unit that captures an image of an imaging target having a watermark data embedded therein;
a watermark data extraction means for extracting watermark data from an image data which has been obtained by capturing an image of an imaging target by the image capturing unit;
an information address acquisition means for acquiring an information address corresponding to the extracted watermark data from the management server; and
an upload means for attaching the acquired information address to the image captured by the image capturing unit as a link, and uploading this link to the web server device, and
the management server device comprises:
a recording means for receiving, from the information provision terminal device, the information address of the recorded information and recording the information address in a recording unit in association with a watermark data that is embedded in the imaging target; and
an information address transmission means for, upon receiving a watermark data from the information reception terminal device, referencing the recording unit and acquiring the information address corresponding to the watermark data and by return transmitting the information address to the information reception terminal device.

36. A user terminal device, comprising:
an image capturing unit that captures an image of an imaging target having a watermark data embedded therein;
a watermark data extraction means for extracting watermark data from an image data which has been obtained by capturing an image of an imaging target by the image capturing unit;
an information address acquisition means for acquiring an information address corresponding to the extracted watermark data from the management server; and
an upload means for attaching the acquired information address to the image captured by the image capturing unit as a link, and uploading this link to the web server device.

37. A user terminal program for realizing a user terminal device by a computer, whereby the computer is made to function as
a watermark data extraction means for extracting watermark data from an image data which has been obtained by capturing an image of an imaging target by an image capturing unit;
an information address acquisition means for acquiring an information address corresponding to the extracted watermark data from the management server; and
an upload means for attaching the acquired information address to the image captured by the image capturing unit as a link, and uploading this link to the web server device.

38. An information registration system provided with a user terminal device; an information provision terminal device; a management server device; and a web server device, wherein
the user terminal device comprises:
an image capturing unit that captures an image of an imaging target having a watermark data embedded therein;
a watermark data extraction means for extracting watermark data from an image data which has been obtained by capturing an image of an imaging target by the image capturing unit;
a registered information acquisition means for acquiring a registered information corresponding to the extracted watermark data from the management server; and
a registering means for transmitting the acquired registered information to the web server device, and
the management server device comprises:
a recording means for receiving, from the information provision terminal device, the registered information and recording the registered information in a recording unit in association with a watermark data that is embedded in the imaging target; and
a registered information transmission means for, upon receiving a watermark data from the information reception terminal device, referencing the recording unit and acquiring a registration method corresponding to the watermark data and by return transmitting the registration method to the user terminal device.

39. A user terminal device, comprising:
an image capturing unit that captures an image of an imaging target having a watermark data embedded therein;
a watermark data extraction means for extracting watermark data from an image data which has been obtained by capturing an image of an imaging target by the image capturing unit;
a registered information acquisition means for acquiring a registered information corresponding to the extracted watermark data from the management server; and
a registering means for transmitting the acquired registered information to the web server device.

40. A user terminal program for realizing a user terminal device by a computer, whereby the computer is made to function as
a watermark data extraction means for extracting watermark data from an image data which has been obtained by capturing an image of an imaging target by an image capturing unit;
a registered information acquisition means for acquiring a registered information corresponding to the extracted watermark data from the management server; and
a registering means for transmitting the acquired registered information to the web server device.

41. A management server device, comprising:
a recording means for receiving, from an information provision terminal device, the registered information and recording the registered information in a recording unit in association with a watermark data that is embedded in the imaging target; and
a registered information transmission means for, upon receiving the watermark data from the information reception terminal device, referencing the recording unit and acquiring a registration method corresponding to the watermark data and by return transmitting the registration method to the user terminal device.

42. A management server program for realizing a management server device by a computer, whereby the computer is made to function as
a recording means for receiving, from an information provision terminal device, the registered information and recording the registered information in a recording unit in association with a watermark data that is embedded in the imaging target; and
a registered information transmission means for, upon receiving the watermark data from the information reception terminal device, referencing the recording unit and acquiring a registration method corresponding to the watermark data and by return transmitting the registration method to the user terminal device.

43. The system, device, or program according to any one of claims 38 to 42, wherein
the registered information includes at least an image of the imaging target.

44. The system, device, or program according to any one of claims 38 to 43, wherein
the registered information includes at least image-associated data for the web server to acquire an image of the imaging target.

45. The system, device, or program according to any one of claims 38 to 44, wherein
the registered information includes at least a program for constructing the registering means.

46. The system, device, or program according to any one of claims 1 to 45, wherein
the provision information includes a program executed by the information reception terminal device.
